# EUROPEAN PATENT SPECIFICATION

(11) **EP 3 489 317 B1**
(45) Date of publication and mention of the grant of the patent: **04.05.2022**
(21) Application number: 18206729.8
(22) Date of filing: 16.11.2018
(51) Int. Cl.: C09J 7/25, B64B 1/22

(54) **THERMAL CONTROL TAPE, SYSTEM, AND METHOD FOR A SPACECRAFT STRUCTURE**
THERMISCHES KONTROLLBAND, SYSTEM UND VERFAHREN FÜR EINE RAUMFAHRZEUGSTRUKTUR
RUBAN DE COMMANDE THERMIQUE, SYSTÈME ET PROCÉDÉ POUR UNE STRUCTURE DE VÉHICULE SPATIAL

(30) Priority: 22.11.2017 US 201715821462
(43) Date of publication of application: 29.05.2019
(73) Proprietor: The Boeing Company, Chicago, IL 60606-1596 (US)
(72) Inventor: BABILO, Peter, Mission Viejo, CA California 92691 (US)
(74) Representative: Bryn-Jacobsen, Caelia

(56) References cited:
- EP-A1- 2 873 993
- CN-A- 1 916 057
- US-A- 6 124 378

## Description

### BACKGROUND

### 1) Field of the Disclosure

The disclosure relates generally to thermal control coatings, systems, and methods for spacecraft, and more particularly, to thermal control tape, tape systems, and methods for application to spacecraft structures, to provide thermal control by radiating heat away from the spacecraft structures.

### 2) Description of Related Art

Spacecraft, such as satellites, rockets, and other unmanned and manned spacecraft, that travel through space may be exposed to extreme temperatures or environmental events which may adversely affect various surfaces of the spacecraft. To provide thermal control of spacecraft structures made of such materials as aluminum, titanium, composite, or plastics that require low solar absorptance and high emittance optical properties, one or more surfaces of such spacecraft structures typically need to be painted or coated with white organic coatings.

Known thermal control paint coatings, paint systems, and paint methods exist for painting spacecraft structures. However, such known thermal control paint coatings, paint systems, and paint methods typically require masking, surface preparation, priming, painting, demasking, and cleanup. For example, masking is very time consuming, as 80%-90% of process time for painting is for masking. Priming and painting may require trained and certified painters to optimize spray gun settings, such as inlet pressure, fan size, air pressure, fluid rate, and other settings. In addition, both primer and paint thicknesses may vary when manually applied or spray applied. For example, a too thin or a too thick layer of primer may affect topcoat adhesion, and areas of thin paint may not meet optical properties such as solar absorptance, and areas of thick paint may have adhesion and cohesion, i.e., paint cracking, issues.

Moreover, priming and painting may require an environment with a humidity of at least 30%, and painting may require mixing of the proper ratios of resin and catalyst, as well as thinning to acceptable consistency. Such mixing and thinning processes may increase the time and cost of the overall painting process. Further, painting typically requires a 7-14 day, room temperature curing period, which may also increase the time and cost of the overall painting process. Further, touching up areas having missing or removed paint may be difficult to perform and access, and may also increase the time and cost of the overall painting process.

In addition, known thermal control metallized tape coatings exist, such as silver or aluminum vapor deposited tapes designed for thermal control. However, such known silver or aluminum vapor deposited tapes may have an undesirable low thermal emittance and may have an undesirable specular reflection rather than a desirable diffuse reflection.

Accordingly, there is a need in the art for an improved thermal control tape, tape system, and method for providing thermal control of one or more spacecraft structures that eliminate painting operations, are simple and fast to apply, that provide improved optical properties, and that provide advantages over known systems and methods.

EP 2873993 in the abstract states "[Problem] To provide an infrared shielding film which realizes a balance between the hard coating properties of the cured resin layer and the suppression of peeling or cracking of the film, while having heat shielding characteristics of an infrared shielding film. [Solution] An infrared shielding film including a substrate; an infrared reflecting layer having at least one or more low refractive index layers and at least one ormore high refractive index layers laminated therein; and a cured resin layer formed at the outermost surface, laminated together, the cured resin layer containing inorganic nanoparticles, in which the hardness obtainable by the pencil hardness test described in JIS K5600-5-4 :1999 is from 2B to 3H; the number of scratches obtainable by a steel wool test (load 500 g/cm 2 , 10 reciprocations) is 15 or less; and the mandrel diameter at which the hard coated surface begins to crack in the bending test described in JIS K5600-5-1:1999 (cylindrical mandrel method) is 15 mm or less."

US 6124378 in the abstract states "An article is a liquid or solid mixture of a plurality of particles and a binder. The article may be a paint or a freestanding film. The particles have a composition A[xAl(1-x)Ga]2O4+ gamma ( delta In), wherein A is zinc, magnesium, and/or cadmium, the value of x is from 0 to 1, the value of delta is from 0 to about 0.2, and the value of gamma is less than about 0.2. In the liquid paint mixture, a paint vehicle is also typically present to impart the desired fluidity to the mixture. The solid paint or film made using this material is white, has very low solar absorptance, and may be made electrically conductive by doping the particles with indium or other appropriate dopant."

CN 1916057 in the abstract states "This invention relates to a method for preparing low-radiation heat-insulating transparent film for controlling sunlight. The film is composed of: organic polymer 70-99.9 wt. %, doping metal oxide nanoparticles 0.1-30 wt. % and adjuvant 0-29.9 wt. %. The method comprises: (1) uniformly dispersing the doping metal oxide nanoparticles into a dispersing medium, mixing with the organic polymer and the adjuvant, and drying to obtain master batches; (2) plasticizing, smelting or extruding and blowing,
calendaring, stretching, extruding and casting to obtain the film. The film can be used as the coating film for architecture glass, automobile window and ship window, and has such advantages as high visible-light permeability, good sunlight obstructing effect, good anti-electrostatic effect, and good electromagnetic radiation resistance."

The present invention is set out in the independent claims, with some optional features set out in the claims dependent thereto.

### SUMMARY

Example implementations of this disclosure provide for an improved thermal control tape, tape system, and method for providing thermal control of one or more spacecraft structures. As discussed in the below detailed description, versions of a thermal control tape, tape system, and method for providing thermal control of one or more spacecraft structures may provide significant advantages over known systems and methods.

In one aspect there is provided a thermal control tape for providing thermal control of a spacecraft structure, to which the thermal control tape is applied. The thermal control tape comprises a filled silicone resin layer having a first side and a second side. The filled silicone resin layer comprises a silicone resin material filled with a white inorganic filler material.

The thermal control tape further comprises a silicone pressure sensitive adhesive (PSA) layer having a first side and a second side. The first side of the silicone PSA layer is attached to the second side of the filled silicone resin layer. The filled silicone resin layer and the silicone PSA layer form the thermal control tape, with the second side of the silicone PSA layer configured for attachment to at least one surface of the spacecraft structure of a spacecraft, to provide thermal control of the spacecraft structure, by radiating heat away from the spacecraft structure.

In another aspect there is provided a thermal control tape for providing thermal control of a spacecraft structure. The thermal control tape comprises a filled silicone resin layer having a first side and a second side. The filled silicone resin layer comprises a silicone resin material filled with a white inorganic filler material. The silicone resin material and the white inorganic filler material are present in a ratio of from 1:3 parts by weight to 1:4 parts by weight.

The thermal control tape further comprises a silicone pressure sensitive adhesive (PSA) layer having a first side and a second side. The first side of the silicone PSA layer is attached to the second side of the filled silicone resin layer. The second side of the silicone PSA layer is configured for attachment to the at least one surface of the spacecraft structure, to provide thermal control of the spacecraft structure, by radiating heat away from the spacecraft structure.

In another aspect there is provided a method of using a thermal control tape to provide thermal control of a spacecraft structure, to which the thermal control tape is applied. The method comprises the step of assembling a thermal control tape system.

The thermal control tape system comprises a thermal control tape. The thermal control tape comprises a filled silicone resin layer having a first side and a second side. The filled silicone resin layer comprises a silicone resin material filled with a white inorganic filler material. The thermal control tape further comprises a silicone pressure sensitive adhesive (PSA) layer having a first side and a second side. The first side of the silicone PSA layer is attached to the second side of the filled silicone resin layer.

The thermal control tape system further comprises a first release liner layer removably attached to the first side of the filled silicone resin layer. The thermal control tape system further comprises a second release liner layer removably attached to the second side of the silicone PSA layer.

The method further comprises the step of preparing at least one surface of the spacecraft structure, to obtain at least one prepared surface, for application of the thermal control tape. The method further comprises the step of removing the second release liner from the second side of the silicone PSA layer.

The method further comprises the step of applying the second side of the silicone PSA layer to the at least one prepared surface of the spacecraft structure. The method further comprises the step of removing the first release liner from the first side of the filled silicone resin layer.

The features, functions, and advantages that have been discussed can be achieved independently in various versions or aspects of the disclosure or may be combined in yet other versions or aspects further details of which can be seen with reference to the following description and drawings.

### BRIEF DESCRIPTION OF THE DRAWINGS

The disclosure can be better understood with reference to the following detailed description taken in conjunction with the accompanying drawings which illustrate exemplary versions or aspects, but which are not necessarily drawn to scale, wherein:
FIG. 1 is an illustration of a front perspective view of an exemplary spacecraft with various surfaces covered with an exemplary thermal control tape of the disclosure;
FIG. 2A is an illustration of an exploded cross-sectional view of an exemplary thermal control tape system that includes an exemplary thermal control tape of the disclosure;
FIG. 2B is an illustration of an assembled cross-sectional view of the thermal control tape system and thermal control tape of FIG. 2A;
FIG. 2C is an illustration of a cross-sectional view of the exemplary thermal control tape of the thermal control tape system of FIG. 2B, applied to a structure;
FIG. 2D is an illustration of a cross-sectional view of the thermal control tape of FIG. 2C, having a plurality of perforations, and applied to the structure;
FIG. 3A is an illustration an exploded cross-sectional view of another exemplary thermal control tape system that includes another exemplary thermal control tape of the disclosure;
FIG. 3B is an illustration of an assembled cross-sectional view of the thermal control tape system and thermal control tape of FIG. 3A;
FIG. 3C is an illustration of a cross-sectional view of the exemplary thermal control tape of the thermal control tape system of FIG. 3B, applied to a structure;
FIG. 3D is an illustration of a cross-sectional view of the thermal control tape of FIG. 3C, having a plurality of perforations, and applied to the structure;
FIG. 4A is an illustration an exploded cross-sectional view of yet another exemplary thermal control tape system that includes yet another exemplary thermal control tape of the disclosure;
FIG. 4B is an illustration of an assembled cross-sectional view of the thermal control tape system and thermal control tape of FIG. 4A;
FIG. 4C is an illustration of a cross-sectional view of the exemplary thermal control tape of the thermal control tape system of FIG. 4B, applied to a structure;
FIG. 4D is an illustration of a cross-sectional view of the thermal control tape of FIG. 4C, having a plurality of perforations, and applied to the structure;
FIG. 5A is an illustration an exploded cross-sectional view of yet another exemplary thermal control tape system that includes yet another exemplary thermal control tape of the disclosure;
FIG. 5B is an illustration of an assembled cross-sectional view of the thermal control tape system and thermal control tape of FIG. 5A;
FIG. 5C is an illustration of a cross-sectional view of the exemplary thermal control tape of the thermal control tape system of FIG. 5B, applied to a structure;
FIG. 5D is an illustration of a cross-sectional view of the thermal control tape of FIG. 5C, having a plurality of perforations, and applied to the structure;
FIG. 6 is an illustration of a solar absorptance graph;
FIG. 7 is an illustration of a normal emittance graph;
FIG. 8 is an illustration of a functional block diagram showing exemplary versions of a thermal control tape system and a thermal control tape of the disclosure;
FIG. 9 is an illustration of a flowchart showing an exemplary method of using a thermal control tape to provide thermal control of a spacecraft structure according to the disclosure;
FIG. 10 is an illustration of a flow diagram of an exemplary spacecraft manufacturing and service method; and
FIG. 11 is an illustration of an exemplary block diagram of a spacecraft.

Each figure shown in this disclosure shows a variation of an aspect of the aspects presented, and only differences will be discussed in detail.

### DETAILED DESCRIPTION

Disclosed versions or aspects will now be described more fully hereinafter with reference to the accompanying drawings, in which some, but not all of the disclosed aspects are shown. Indeed, several different versions or aspects may be provided and should not be construed as limited to the versions or aspects set forth herein. Rather, these versions or aspects are provided so that this disclosure will be thorough and fully convey the scope of the disclosure to those skilled in the art.

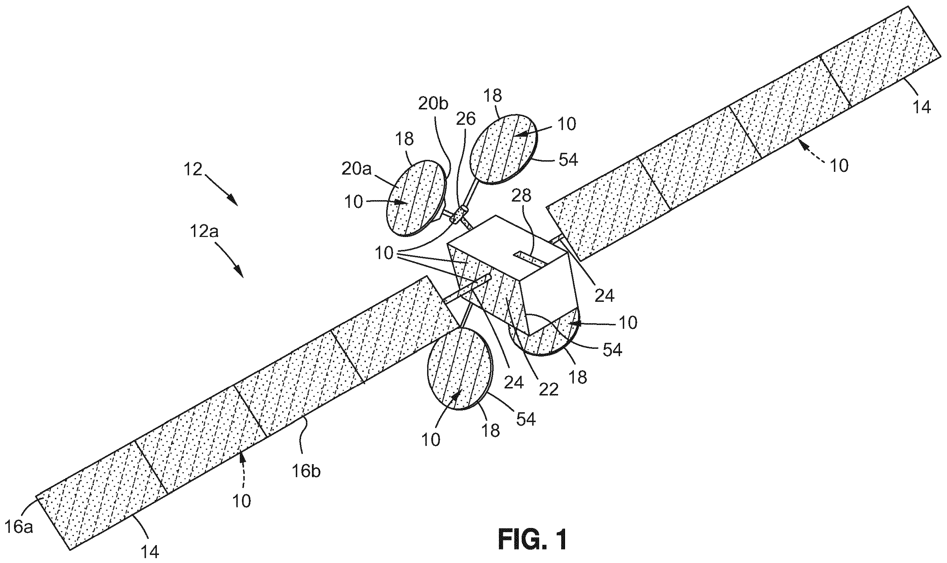

Now referring to the Figures, FIG. 1 is an illustration of a front perspective view of an exemplary spacecraft vehicle 12, such as in the form a satellite 12a, with one or more surfaces 54 covered with an exemplary thermal control tape 10 of the disclosure. As shown in FIG. 1, the spacecraft 12, such as in the form of satellite 12a, comprises solar arrays 14. Each solar array 14 (see FIG. 1) has a first side 16a (see FIG. 1) and a second side 16b (see FIG. 1). As shown in FIG. 1, the second side 16b of each solar array 14 is coated or covered with the thermal control tape 10, as disclosed herein, and the first side 16a of each solar array 14 is not coated or covered with the thermal control tape 10. As further shown in FIG. 1, the spacecraft 12, such as in the form of satellite 12a, comprises four antennas 18. Each antenna 18 (see FIG. 1) has a first reflector side 20a (see FIG. 1) and a second non-reflector side 20b (see FIG. 1). As shown in FIG. 1, the first reflector side 20a of each antenna 18 is coated or covered with the thermal control tape 10, as disclosed herein, and the second non-reflector side 20b is not coated or covered with the thermal control tape 10.

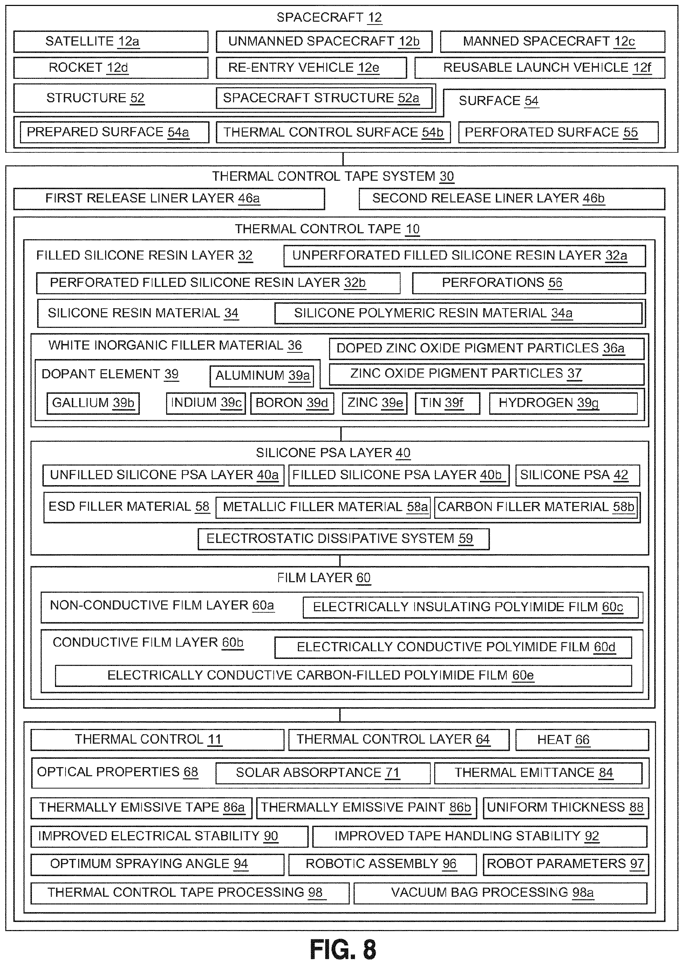

As further shown in FIG. 1, the spacecraft 12, such as in the form of satellite 12a, comprises a radiator 22, one or more struts 24, one or more brackets 26, and one or more fittings 28. One or more surfaces 54 (see FIGS. 1, 8) of the radiator 22 (see FIG. 1), the one or more struts 24 (see FIG. 1), the one or more brackets 26 (see FIG. 1), and the one or more fittings 28 (see FIG. 1) are coated or covered with the thermal control tape 10.

As used herein, "spacecraft" may include, but is not limited to, a satellite 12a (see FIGS. 1, 8), an unmanned spacecraft 12b (see FIG. 8), a manned spacecraft 12c (see FIG. 8), a rocket 12d (see FIG. 8), a re-entry vehicle 12e (see FIG. 8), a reusable launch vehicle (RLV) 12f (see FIG. 8), or another suitable spacecraft vehicle or object that travels through space. As used herein, "re-entry vehicles" may include, but are not limited to, satellites, rockets, manned and unmanned spacecraft and capsules, ballistic missile payloads, or other parts of a spacecraft configured to return from space through Earth's atmosphere and configured to withstand very high temperatures and very high speeds or velocities through Earth's atmosphere, and configured to protect crew members and/or instruments and equipment on the vehicle. As used herein, "reusable launch vehicle (RLV)" means a vehicle that is launched into space more than once, or is capable of launching a payload into space more than once.

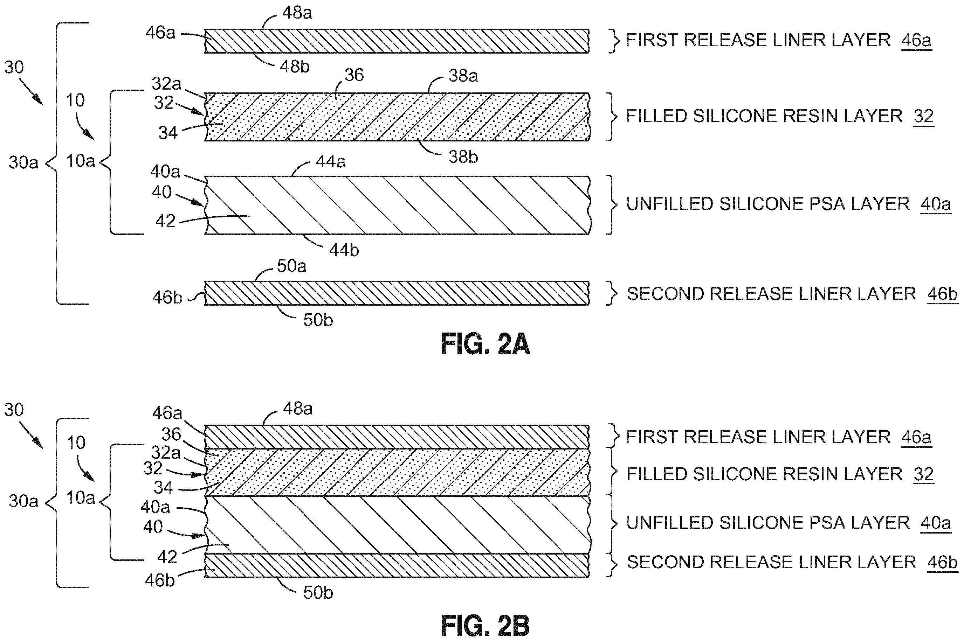

In one version of the disclosure, there is provided the thermal control tape 10 (see FIGS. 2A-5D) for providing thermal control 11 (see FIG. 8) of a structure 52 (see FIG. 8), such as in the form of a spacecraft structure 52a (see FIG. 8), to which the thermal control tape 10 is applied.

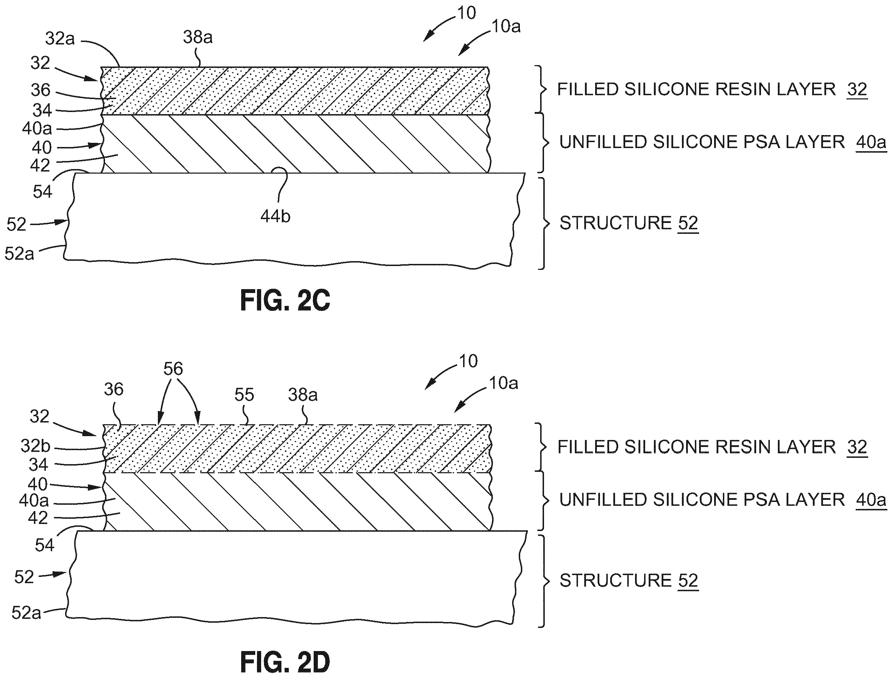

Now referring to FIGS. 2A-2D, an exemplary thermal control tape 10 that may be part of an exemplary thermal control tape system 30 (see FIGS. 2A-2B) is provided. FIG. 2A is an illustration of an exploded cross-sectional view of the exemplary thermal control tape system 30, such as in the form of thermal control tape system 30a, that includes the exemplary thermal control tape 10, such as in the form of thermal control tape 10a, of the disclosure. FIG. 2B is an illustration of an assembled cross-sectional view of the thermal control tape system 30, such as in the form of thermal control tape system 30a, of FIG. 2A, with the thermal control tape 10, such as in the form of thermal control tape 10a. FIG. 2C is an illustration of a cross-sectional view of the exemplary thermal control tape 10, such as in the form of thermal control tape 10a, of the thermal control tape system 30, of FIG. 2B, applied to a structure 52, such as a spacecraft structure 52a. FIG. 2D is an illustration of a cross-sectional view of the thermal control tape 10, such as in the form of thermal control tape 10a, of FIG. 2C, having a plurality of perforations 56, or openings, and applied to the structure 52.

As shown in FIGS. 2A-2D, the thermal control tape system 30, such as in the form of thermal control tape system 30a, comprises the thermal control tape 10, such as in the form of thermal control tape 10a. The thermal control tape 10 (see FIGS. 2A-2D), such as in the form of thermal control tape 10a (see FIGS. 2A-2D), comprises a filled silicone resin layer 32 (see FIGS. 2A-2D) having a first side 38a (see FIGS. 2A, 2C, 2D) and a second side 38b (see FIG. 2A).

The filled silicone resin layer 32 (see FIGS. 2A-2D) may comprise an unperforated filled silicone resin layer 32a (see FIGS. 2A-2C), or may comprise a perforated filled silicone resin layer 32b (see FIG. 2D). As shown in FIGS. 2A-2D, the filled silicone resin layer 32 comprises a silicone resin material 34 filled with a white inorganic filler material 36. The silicone resin material 34 (see FIGS. 2A-2D) and the white inorganic filler material 36 (see FIGS. 2A-2D) are preferably present in a ratio of from 1:3 parts by weight to 1:4 parts by weight of the total weight of the filled silicone resin layer 32.

The silicone resin material 34 (see FIGS. 2A-2D) may comprise a silicone polymeric resin material 34a (see FIG. 8) or another suitable silicone resin material 34. The white inorganic filler material 36 (see FIGS. 2A-2D) of the filled silicone resin layer 32 preferably comprises doped zinc oxide pigment particles 36a (see FIG. 8) formed from zinc oxide pigment particles 37 (see FIG. 8) doped with a dopant element 39 (see FIG. 8). As shown in FIG. 8, which is discussed in more detail below, the dopant element 39 may consist of one or more of, aluminum 39a, gallium 39b, indium 39c, boron 39d, zinc 39e, tin 39f, hydrogen 39g, or another suitable dopant element 39. An exemplary method of preparing the white inorganic filler material 36 is disclosed in U.S. Patent No. 5,094,693, which is herein incorporated by reference in its entirety. An exemplary method of preparing the filled silicone resin layer 32 is disclosed in U.S. Patent No. 5,770,269, which is herein incorporated by reference in its entirety.

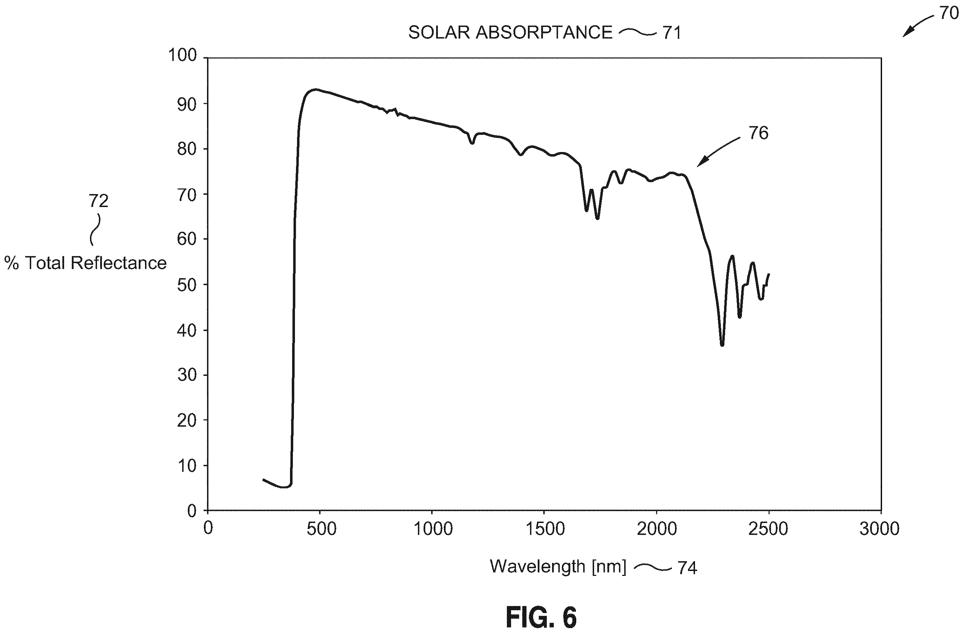

The filled silicone resin layer 32 (see FIGS. 2A-2D) preferably has a thickness in a range of from about 2 mil (0.002 inch) to about 5 mil (0.005 inch). The thicker the filled silicone resin layer 32 is, the more reflective it may be, and the lower a solar absorptance 71 (see FIGS. 6, 8) it may have. The filled silicone resin layer 32 (see FIGS. 2A-2D), with the white inorganic filler material 36 (see FIGS. 2A-2D), preferably has a solar absorptance 71 (see FIGS. 6, 8) that is low and preferably has a thermal emittance 84 (see FIG. 8) that is high.

As shown in FIGS. 2A-2D, the thermal control tape 10, such as in the form of thermal control tape 10a, further comprises a silicone pressure sensitive adhesive (PSA) layer 40 having a first side 44a (see FIG. 2A) and a second side 44b (see FIG. 2A). The first side 44a (see FIG. 2A) of the silicone PSA layer 40 (see FIG. 2A) is configured for attachment to, and is attached to, the second side 38b (see FIG. 2A) of the filled silicone resin layer 32 (see FIG. 2A). Preferably, the silicone PSA layer 40 (see FIGS. 2A-2D) comprises a silicone pressure sensitive adhesive (PSA) 42 (see FIGS. 2A-2D), or another suitable pressure sensitive adhesive (PSA). The silicone PSA layer 40 preferably has a superior adhesion over a wider temperature range, as compared to acrylic adhesives or rubber adhesives. In addition, the silicone PSA layer 40 may be superior in terms of radiation degradation, as compared to other types of adhesives.

The silicone PSA layer 40 (see FIGS. 2A-2D) preferably has a thickness in a range of from about 2 mil (0.002 inch) to about 5 mil (0.005 inch), and more preferably, has a thickness of about 4 mil (0.004 inch). The thickness of the silicone PSA layer 40 may be determined by its robustness, in terms of adhesion, in a space environment.

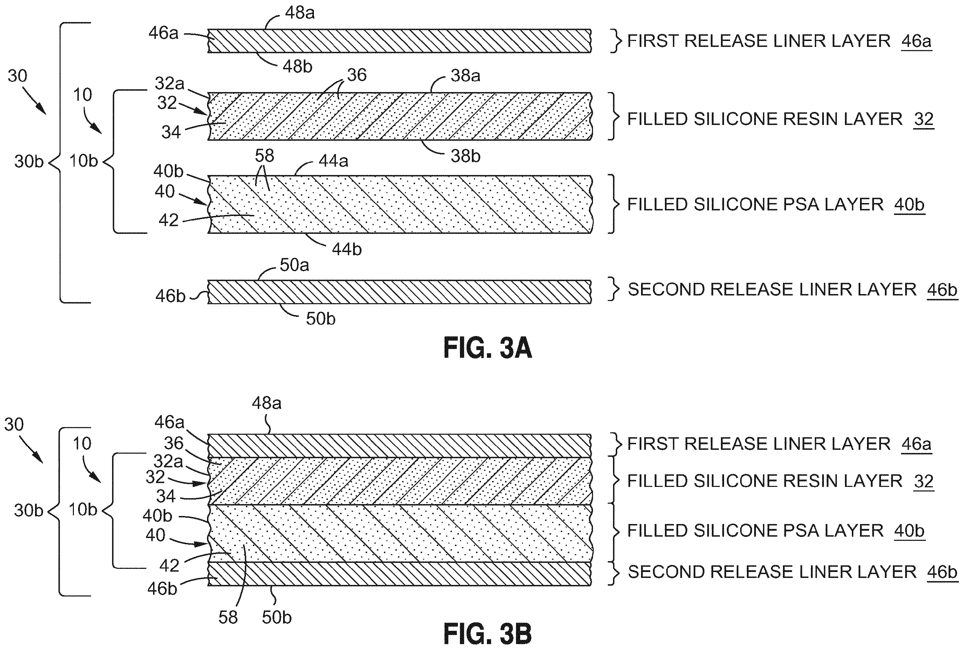

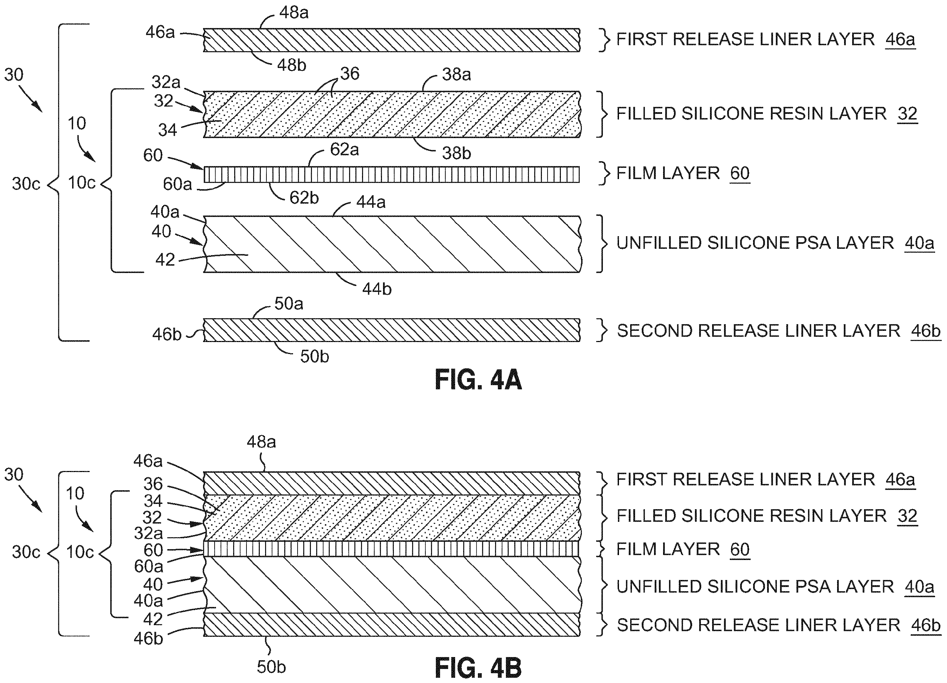

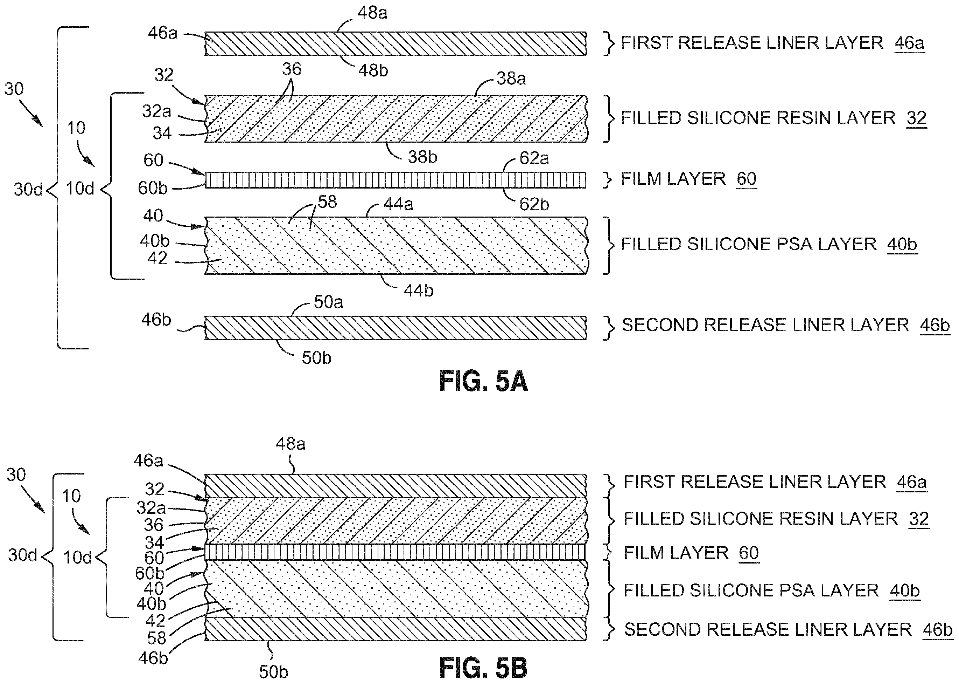

In one version of the thermal control tape 10, shown in FIGS. 2A-2D and FIGS. 4A-4D, the silicone PSA layer 40 comprises an unfilled silicone pressure sensitive adhesive (PSA) layer 40a. In another version of the thermal control tape 10, shown in FIGS. 3A-3D and FIGS. 5A-5D, and discussed in further detail below, the silicone PSA layer 40 comprises a filled silicone pressure sensitive adhesive (PSA) layer 40b.

As shown in FIGS. 2A-2B, the thermal control tape system 30, such as in the form of thermal control tape system 30a, further comprises a first release liner layer 46a having a first side 48a and a second side 48b (see FIG. 2A). The second side 48b of the first release liner layer 46a is preferably removably attached to the first side 38a of the filled silicone resin layer 32.

As shown in FIGS. 2A-2B, the thermal control tape system 30, such as in the form of thermal control tape system 30a, further comprises a second release liner layer 46b having a first side 50a (see FIG. 2A) and a second side 50b. The first side 50a of the second release liner layer 46b is preferably removably attached to the second side 44b of the silicone PSA layer 40.

The first release liner layer 46a (see FIGS. 2A-2B) and the second release liner layer 46b (see FIGS. 2A-2B) may each comprise a fluoropolymer film, for example, a polyvinyl fluoride (PVF) film, or another suitable polymeric material. Preferably, the first release liner layer 46a (see FIGS. 2A-2B) and the second release liner layer 46b (see FIGS. 2A-2B) do not include a plasticizer in order to avoid degrading the whiteness of the white inorganic filler material 36 (see FIGS. 2A-2B) of the filled silicone resin layer 32 (see FIGS. 2A-2B).

The first release liner layer 46a (see FIGS. 2A-2B) preferably has a thickness in a range of from about 1 mil (0.001 inch) to about 4 mil (0.004 inch), and more preferably, has a thickness in a range of from about 1 mil (0.001 inch) to about 2 mil (0.002 inch). The second release liner layer 46b (see FIGS. 2A-2B) preferably has a thickness in a range of from about 3 mil (0.004 inch) to about 4 mil (0.004 inch), and more preferably, has a thickness of 4 mil (0.004 inch). The second release liner layer 46b is preferably thicker than the first release liner layer 46a because the silicone PSA layer 40 tends to be sticky, and the thicker the second release liner layer 46b adjacent the silicone PSA layer 40 is, the easier it may be to remove the second release liner layer 46b from the silicone PSA layer 40.

As shown in FIGS. 2C-2D, the filled silicone resin layer 32 and the unfilled silicone PSA layer 40a form the thermal control tape 10, such as in the form of thermal control tape 10a, with the second side 44b (see FIG. 2C) of the unfilled silicone PSA layer 40a configured for attachment to at least one surface 54 of the structure 52, such as the spacecraft structure 52a, of the spacecraft 12 (see FIGS. 1, 8), to provide thermal control 11 (see FIG. 8) of the spacecraft structure 52a, by radiating heat 66 (see FIG. 8) away from the spacecraft structure 52a.

As shown in FIG. 2D, the filled silicone resin layer 32 of the thermal control tape 10, such as in the form of thermal control tape 10a, applied to the structure 52, has a plurality of perforations 56, or openings, to form the perforated filled silicone resin layer 32b. The perforations 56 (see FIG. 2D), or openings, create a perforated surface 55 (see FIG. 2D) that may provide an escape or exit for any outgassing in a space environment. In addition, the perforated surface 55 (see FIG. 2D) may provide an escape or exit for any air during application of the thermal control tape 10 (see FIG. 2D) to the structure 52 (see FIG. 2D).

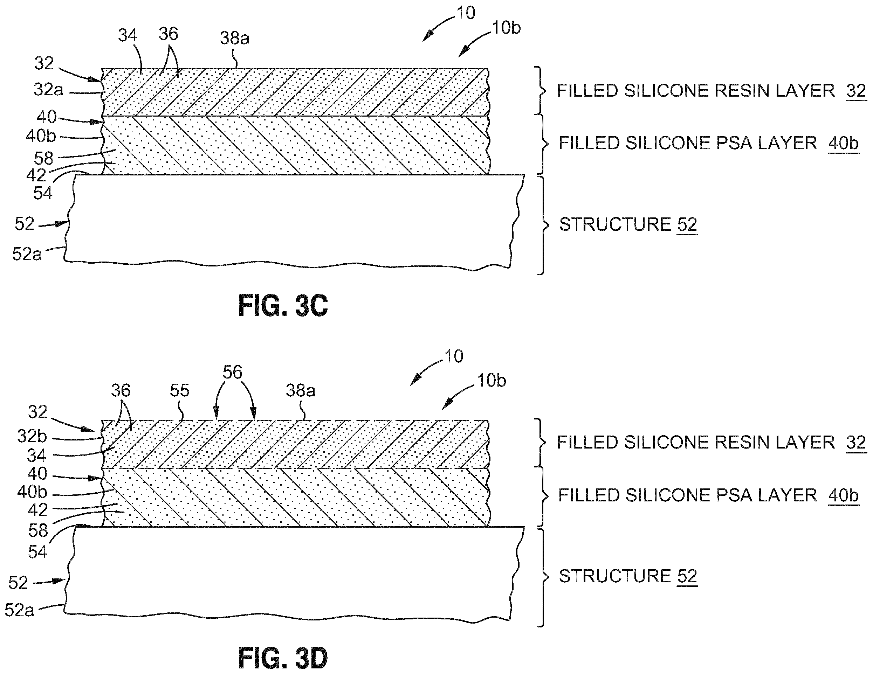

Now referring to FIGS. 3A-3D, another exemplary thermal control tape 10 that may be part of another exemplary thermal control tape system 30 (see FIGS. 3A-3B) is provided. FIG. 3A is an illustration an exploded cross-sectional view of another exemplary thermal control tape system 30, such as in the form of thermal control tape system 30b, that includes another exemplary thermal control tape 10, such as in the form of thermal control tape 10b, of the disclosure. FIG. 3B is an illustration of an assembled cross-sectional view of the thermal control tape system 30, such as in the form of thermal control tape system 30b, of FIG. 3A, with the thermal control tape 10, such as in the form of thermal control tape 10b. FIG. 3C is an illustration of a cross-sectional view of the exemplary thermal control tape 10, such as in the form of thermal control tape 10b, of the thermal control tape system 30, of FIG. 3B, applied to the structure 52, such as the spacecraft structure 52a FIG. 3D is an illustration of a cross-sectional view of the thermal control tape 10, such as in the form of thermal control tape 10b, of FIG. 3C, having the plurality of perforations 56, or openings, and applied to the structure 52.

In this version of the thermal control tape system 30, such as in the form of thermal control tape system 30b, shown in FIGS. 3A-3D, the silicone PSA layer 40 comprises a filled silicone PSA layer 40b, instead of an unfilled silicone PSA layer 40a (see FIGS. 2A-2D).

As shown in FIGS. 3A-3D, the thermal control tape 10, such as in the form of thermal control tape 10b, of the thermal control tape system 30, such as in the form of thermal control tape system 30b, comprises the filled silicone resin layer 32 having the first side 38a (see FIGS. 3A, 3C, 3D) and the second side 38b (see FIG. 3A). As discussed above, the filled silicone resin layer 32 (see FIGS. 3A-3D) may comprise the unperforated filled silicone resin layer 32a (see FIGS. 3A-3C), or may comprise the perforated filled silicone resin layer 32b (see FIG. 3D). As shown in FIGS. 3A-3D, the filled silicone resin layer 32 comprises the silicone resin material 34 filled with the white inorganic filler material 36. The silicone resin material 34 (see FIGS. 3A-3D) may comprise the silicone polymeric resin material 34a (see FIG. 8), or another suitable silicone resin material 34, and the white inorganic filler material 36 (see FIGS. 3A-3D) is the same as discussed above with respect to FIGS. 2A-2D. The filled silicone resin layer 32 (see FIGS. 3A-3D) preferably has a thickness in a range of from about 2 mil (0.002 inch) to about 5 mil (0.005 inch).

As shown in FIGS. 3A-3D, the thermal control tape 10, such as in the form of thermal control tape 10b, further comprises the silicone pressure sensitive adhesive (PSA) layer 40 having the first side 44a (see FIG. 3A) and the second side 44b (see FIG. 3A). The first side 44a (see FIG. 3A) of the silicone PSA layer 40 (see FIG. 3A) is configured for attachment to, and is attached to, the second side 38b (see FIG. 3A) of the filled silicone resin layer 32 (see FIG. 3A). Preferably, the silicone PSA layer 40 (see FIGS. 3A-3D) comprises the silicone pressure sensitive adhesive (PSA) 42 (see FIGS. 3A-3D), or another suitable pressure sensitive adhesive (PSA). As discussed above, the silicone PSA layer 40 (see FIGS. 3A-3D) preferably has a thickness in a range of from about 2 mil (0.002 inch) to about 5 mil (0.005 inch), and more preferably, has a thickness of about 4 mil (0.004 inch).

In this version shown in FIGS. 3A-3D, the silicone PSA layer 40 comprises the filled silicone pressure sensitive adhesive (PSA) layer 40b. Preferably, the silicone PSA layer 40 is the filled silicone PSA layer 40b. As shown in FIGS. 3A-3D, the silicone PSA layer 40, such as in the form of filled silicone PSA layer 40b, comprises an electrostatic dissipative (ESD) filler material 58. The ESD filler material 58 (see FIGS. 3A-3D) may comprise one of, a metallic filler material 58a (see FIG. 8), a carbon filler material 58b (see FIG. 8), or another suitable ESD filler material 58. The metallic filler material 58a (see FIG. 8) may comprise nickel particles, copper particles, glass spheres coated with nickel, glass spheres coated with copper, or another suitable metallic filler material 58a. Preferably, the ESD filler material 58 is the carbon filler material 58b (see FIG. 8).

As shown in FIGS. 3A-3B, the thermal control tape system 30, such as in the form of thermal control tape system 30b, further comprises the first release liner layer 46a having the first side 48a and the second side 48b (see FIG. 3A), where the second side 48b of the first release liner layer 46a is preferably removably attached to the first side 38a of the filled silicone resin layer 32. As shown in FIGS. 3A-3B, the thermal control tape system 30, such as in the form of thermal control tape system 30b, further comprises the second release liner layer 46b having the first side 50a (see FIG. 3A) and the second side 50b, where the first side 50a of the second release liner layer 46b is preferably removably attached to the second side 44b of the silicone PSA layer 40. The thicknesses and preferred materials of the first release liner layer 46a (see FIGS. 3A-3B) and the second release liner layer 46b (see FIGS. 3A-3B) are the same as discussed above with respect to FIGS. 2A-2B.

As shown in FIGS. 3C-3D, the filled silicone resin layer 32 and the filled silicone PSA layer 40b form the thermal control tape 10, such as in the form of thermal control tape 10b, with the second side 44b (see FIG. 3A) of the filled silicone PSA layer 40b configured for attachment to at least one surface 54 of the structure 52, such as the spacecraft structure 52a, of the spacecraft 12 (see FIGS. 1, 8), to provide thermal control 11 (see FIG. 8) of the spacecraft structure 52a, by radiating heat 66 (see FIG. 8) away from the spacecraft structure 52a.

As shown in FIG. 3D, the filled silicone resin layer 32 of the thermal control tape 10, such as in the form of thermal control tape 10b, applied to the structure 52, has the plurality of perforations 56, or openings, to form the perforated filled silicone resin layer 32b. The perforations 56 (see FIG. 3D), or openings, create the perforated surface 55 (see FIG. 3D) that may provide an escape or exit for any outgassing in a space environment, or may provide an escape or exit for any air during application of the thermal control tape 10 (see FIG. 3D) to the structure 52 (see FIG. 3D).

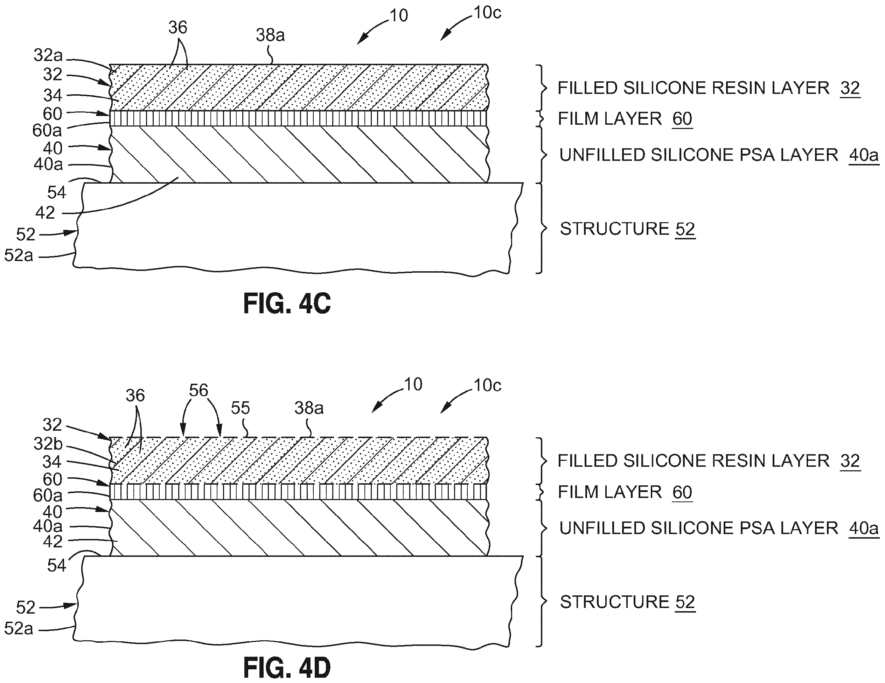

Now referring to FIGS. 4A-4D, another exemplary thermal control tape 10 that may be part of another exemplary thermal control tape system 30 (see FIGS. 4A-4B) is provided. FIG. 4A is an illustration an exploded cross-sectional view of yet another exemplary thermal control tape system 30, such as in the form of thermal control tape system 30c, that includes another exemplary thermal control tape 10, such as in the form of thermal control tape 10c, of the disclosure. FIG. 4B is an illustration of an assembled cross-sectional view of the thermal control tape system 30, such as in the form of thermal control tape system 30c,of FIG. 4A, with the thermal control tape 10, such as in the form of thermal control tape 10c. FIG. 4C is an illustration of a cross-sectional view of the exemplary thermal control tape 10, such as in the form of thermal control tape 10c, of the thermal control tape system 30, of FIG. 4B, applied to the structure 52, such as the spacecraft structure 52a FIG. 4D is an illustration of a cross-sectional view of the thermal control tape 10, such as in the form of thermal control tape 10c, of FIG. 4C, having the plurality of perforations 56, or openings, and applied to the structure 52.

In this version of the thermal control tape system 30, such as in the form of thermal control tape system 30c, shown in FIGS. 4A-4D, the thermal control tape 10, such as in the form of thermal control tape 10c, further comprises a film layer 60 added between the filled silicone resin layer 32 and the silicone PSA layer 40, such as in the form of unfilled silicone PSA layer 40a. In the version shown in FIGS. 4A-4D, the film layer 60 comprises a non-conductive film layer 60a. In another version shown in FIGS. 5A-5D, the film layer 60 comprises a conductive film layer 60b.

The non-conductive film layer 60a (see FIGS. 4A-4D, 8) preferably comprises an electrically insulating polyimide film 60c (see FIG. 8), or another suitable non-conductive polyimide or polymer film. The film layer 60 (see FIGS. 4A-4D), such as in the form of non-conductive film layer 60a (see FIGS. 4A-4D), preferably has a thickness in a range of from about 1 mil (0.001 inch) to about 3 mil (0.003 inch), and more preferably, has a thickness of about 1 mil (0.001 inch).

As shown in FIG. 4A, the film layer 60 has a first side 62a and a second side 62b. When assembled, the first side 62a (see FIG. 4A) of the film layer 60 (see FIG. 4A) is adjacent the second side 38b (see FIG. 4A) of the filled silicone resin layer 32, and the second side 62b (see FIG. 4A) of the film layer 60 (see FIG. 4A) is adjacent the first side 44a (see FIG. 4A) of the silicone PSA layer 40, such as the unfilled silicone PSA layer 40a (see FIG. 4A). If the non-conductive film layer 60a (see FIGS. 4A-4D) is added to the thermal control tape 10, such as in the form of thermal control tape 10c, the unfilled silicone PSA layer 40a is preferably used.

The addition of the non-conductive film layer 60a (see FIGS. 4A-4D, 8) to the thermal control tape 10 (see FIGS. 4A-4D) preferably improves tape handling stability. Thus, the thermal control tape 10 (see FIGS. 4A-4D), such as in the form of thermal control tape 10c (see FIGS. 4A-4D), may provide an improved tape handling stability 92 (see FIG. 8).

As shown in FIGS. 4A-4D, the thermal control tape 10, such as in the form of thermal control tape 10c, of the thermal control tape system 30, such as in the form of thermal control tape system 30c, comprises the filled silicone resin layer 32 having the first side 38a (see FIGS. 4A, 4C, 4D) and the second side 38b (see FIG. 4A). As discussed above, the filled silicone resin layer 32 (see FIGS. 4A-4D) may comprise the unperforated filled silicone resin layer 32a (see FIGS. 4A-4C), or may comprise the perforated filled silicone resin layer 32b (see FIG. 4D).

As shown in FIGS. 4A-4D, the filled silicone resin layer 32 comprises the silicone resin material 34 filled with the white inorganic filler material 36. The silicone resin material 34 (see FIGS. 4A-4D) may comprise the silicone polymeric resin material 34a (see FIG. 8), or another suitable silicone resin material 34, and the white inorganic filler material 36 (see FIGS. 4A-4D) is the same as discussed above with respect to FIGS. 2A-2D. The filled silicone resin layer 32 (see FIGS. 4A-4D) preferably has the thickness in a range of from about 2 mil (0.002 inch) to about 5 mil (0.005 inch).

As shown in FIGS. 4A-4D, the thermal control tape 10, such as in the form of thermal control tape 10c, further comprises the silicone pressure sensitive adhesive (PSA) layer 40, in the form of unfilled silicone pressure sensitive adhesive (PSA) layer 40a, having the first side 44a (see FIG. 4A) and the second side 44b (see FIG. 4A). The first side 44a (see FIG. 4A) of the silicone PSA layer 40 (see FIG. 4A) is configured for attachment to, and is attached to, the second side 38b (see FIG. 4A) of the filled silicone resin layer 32 (see FIG. 4A). Preferably, the silicone PSA layer 40 (see FIGS. 4A-4D) comprises the silicone pressure sensitive adhesive (PSA) 42 (see FIGS. 4A-4D), or another suitable pressure sensitive adhesive (PSA). As discussed above, the silicone PSA layer 40 (see FIGS. 4A-4D) preferably has the thickness in a range of from about 2 mil (0.002 inch) to about 5 mil (0.005 inch), and more preferably, has a thickness of about 4 mil (0.004 inch).

As shown in FIGS. 4A-4B, the thermal control tape system 30, such as in the form of thermal control tape system 30c, further comprises the first release liner layer 46a having the first side 48a and the second side 48b (see FIG. 4A), where the second side 48b of the first release liner layer 46a is preferably removably attached to the first side 38a of the filled silicone resin layer 32. As shown in FIGS. 4A-4B, the thermal control tape system 30, such as in the form of thermal control tape system 30c, further comprises the second release liner layer 46b having the first side 50a (see FIG. 4A) and the second side 50b, where the first side 50a of the second release liner layer 46b is preferably removably attached to the second side 44b of the silicone PSA layer 40. The thicknesses and preferred materials of the first release liner layer 46a (see FIGS. 4A-4B) and the second release liner layer 46b (see FIGS. 4A-4B) are the same as discussed above with respect to FIGS. 2A-2B.

As shown in FIGS. 4C-4D, the filled silicone resin layer 32 and the unfilled silicone PSA layer 40a form the thermal control tape 10, such as in the form of thermal control tape 10c, with the second side 44b (see FIG. 4A) of the filled silicone PSA layer 40b configured for attachment to at least one surface 54 of the structure 52, such as the spacecraft structure 52a, of the spacecraft 12 (see FIGS. 1, 8), to provide thermal control 11 (see FIG. 8) of the spacecraft structure 52a, by radiating heat 66 (see FIG. 8) away from the spacecraft structure 52a.

As shown in FIG. 4D, the filled silicone resin layer 32 of the thermal control tape 10, such as in the form of thermal control tape 10c, applied to the structure 52, has the plurality of perforations 56, or openings, to form the perforated filled silicone resin layer 32b. The perforations 56 (see FIG. 4D), or openings, create the perforated surface 55 (see FIG. 4D) that may provide an escape or exit for any outgassing in a space environment, or may provide an escape or exit for any air during application of the thermal control tape 10 (see FIG. 4D) to the structure 52 (see FIG. 4D).

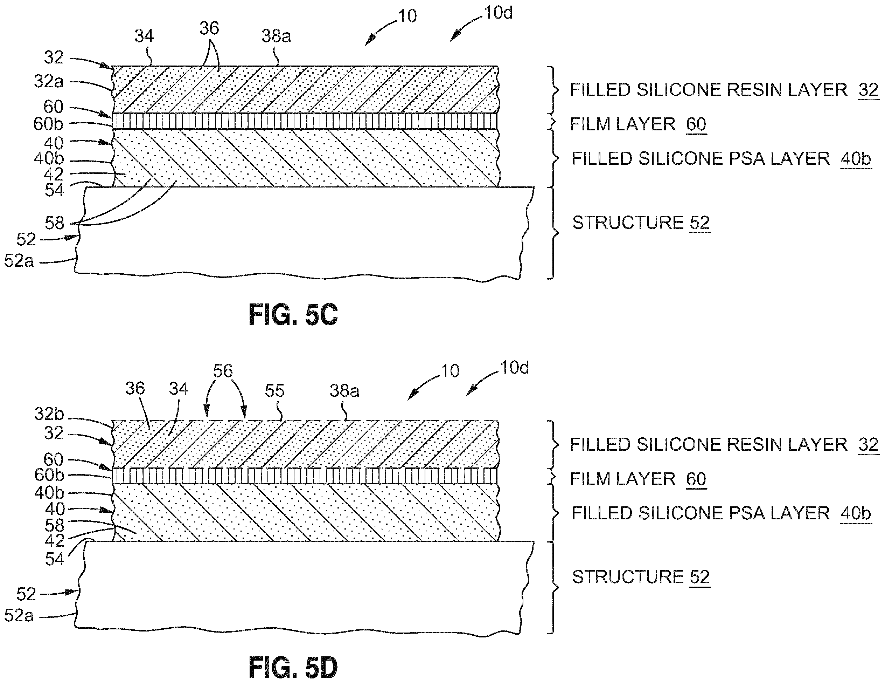

Now referring to FIGS. 5A-5D, another exemplary thermal control tape 10 that may be part of another exemplary thermal control tape system 30 (see FIGS. 5A-5B) is provided. FIG. 5A is an illustration an exploded cross-sectional view of yet another exemplary thermal control tape system 30, such as in the form of thermal control tape system 30d, that includes another exemplary thermal control tape 10, such as in the form of thermal control tape 10d, of the disclosure. FIG. 5B is an illustration of an assembled cross-sectional view of the thermal control tape system 30, such as in the form of thermal control tape system 30d,of FIG. 5A, with the thermal control tape 10, such as in the form of thermal control tape 10d. FIG. 5C is an illustration of a cross-sectional view of the exemplary thermal control tape 10, such as in the form of thermal control tape 10d, of the thermal control tape system 30, of FIG. 5B, applied to the structure 52, such as the spacecraft structure 52a FIG. 5D is an illustration of a cross-sectional view of the thermal control tape 10, such as in the form of thermal control tape 10d, of FIG. 5C, having the plurality of perforations 56, or openings, and applied to the structure 52.

In this version of the thermal control tape system 30, such as in the form of thermal control tape system 30d, shown in FIGS. 5A-5D, the thermal control tape 10, such as in the form of thermal control tape 10d, further comprises the film layer 60 added between the filled silicone resin layer 32 and the silicone PSA layer 40, such as in the form of filled silicone PSA layer 40b.

In this version shown in FIGS. 5A-5D, the film layer 60 comprises the conductive film layer 60b. The conductive film layer 60b (see FIGS. 5A-5D, 8) preferably comprises an electrically conductive polyimide film 60d (see FIG. 8), an electrically conductive carbon-filled polyimide film 60e (see FIG. 8), or another suitable conductive polyimide or polymer film. Preferably, the conductive film layer 60b remains stable across a wide range of temperatures, for example, from -269 degrees Celsius to +400 degrees Celsius (-452 degrees Fahrenheit to +752 degrees Fahrenheit). The film layer 60 (see FIGS. 4A-4D), such as in the form of conductive film layer 60b (see FIGS. 5A-5D), preferably has a thickness in a range of from about 1 mil (0.001 inch) to about 3 mil (0.003 inch), and more preferably, has a thickness of about 1 mil (0.001 inch).

As shown in FIG. 5A, the film layer 60 has the first side 62a and the second side 62b. When assembled, the first side 62a (see FIG. 5A) of the film layer 60 (see FIG. 5A) is adjacent the second side 38b (see FIG. 5A) of the filled silicone resin layer 32, and the second side 62b (see FIG. 5A) of the film layer 60 (see FIG. 5A) is adjacent the first side 44a (see FIG. 5A) of the silicone PSA layer 40, such as the filled silicone PSA layer 40b (see FIG. 5A). If the conductive film layer 60b (see FIGS. 5A-5D) is added to the thermal control tape 10 (see FIGS. 5A-5D), such as in the form of thermal control tape 10d (see FIGS. 5A-5D, the filled silicone PSA layer 40b (see FIGS. 5A-5D) filled with the ESD filler material 58 (see FIGS. 5A-5D), such as the metallic filler material 58a (see FIG. 8) or the carbon filler material 58b (see FIG. 8), is preferably used.

The addition of the conductive film layer 60b (see FIGS. 5A-5D, 8) to the thermal control tape 10 (see FIGS. 5A-5D) may add greater electrical stability for electrostatic dissipation and may improve tape handling stability. Thus, the thermal control tape 10 (see FIGS. 5A-5D), such as in the form of thermal control tape 10d (see FIGS. 5A-5D), may provide an improved electrical stability 90 (see FIG. 8) and an improved tape handling stability 92 (see FIG. 8).

As shown in FIGS. 5A-5D, the thermal control tape 10, such as in the form of thermal control tape 10d, of the thermal control tape system 30, such as in the form of thermal control tape system 30d, comprises the filled silicone resin layer 32 having the first side 38a (see FIGS. 5A, 5C, 5D) and the second side 38b (see FIG. 5A).

As discussed above, the filled silicone resin layer 32 (see FIGS. 5A-5D) may comprise the unperforated filled silicone resin layer 32a (see FIGS. 5A-5C), or may comprise the perforated filled silicone resin layer 32b (see FIG. 5D). As shown in FIGS. 5A-5D, the filled silicone resin layer 32 comprises the silicone resin material 34 filled with the white inorganic filler material 36.

As shown in FIGS. 5A-5D, the filled silicone resin layer 32 comprises the silicone resin material 34 filled with the white inorganic filler material 36. The silicone resin material 34 (see FIGS. 5A-5D) may comprise the silicone polymeric resin material 34a (see FIG. 8), or another suitable silicone resin material 34, and the white inorganic filler material 36 (see FIGS. 5A-5D) is the same as discussed above with respect to FIGS. 2A-2D. The filled silicone resin layer 32 (see FIGS. 5A-5D) preferably has the thickness in a range of from about 2 mil (0.002 inch) to about 5 mil (0.005 inch).

As shown in FIGS. 5A-5D, the thermal control tape 10, such as in the form of thermal control tape 10d, further comprises the silicone PSA layer 40, such as in the form of filled silicone PSA layer 40b, having the first side 44a (see FIG. 5A) and the second side 44b (see FIG. 5A). The first side 44a (see FIG. 5A) of the silicone PSA layer 40 (see FIG. 5A) is configured for attachment to, and is attached to, the second side 38b (see FIG. 5A) of the filled silicone resin layer 32 (see FIG. 5A). Preferably, the silicone PSA layer 40 (see FIGS. 5A-5D) comprises the silicone pressure sensitive adhesive (PSA) 42 (see FIGS. 5A-5D), or another suitable pressure sensitive adhesive (PSA). As discussed above, the silicone PSA layer 40 (see FIGS. 5A-5D) preferably has the thickness in a range of from about 2 mil (0.002 inch) to about 5 mil (0.005 inch), and more preferably, has a thickness of about 4 mil (0.004 inch).

As shown in FIGS. 5A-5B, the thermal control tape system 30, such as in the form of thermal control tape system 30d, further comprises the first release liner layer 46a having the first side 48a and the second side 48b (see FIG. 5A), where the second side 48b of the first release liner layer 46a is preferably removably attached to the first side 38a of the filled silicone resin layer 32. As shown in FIGS. 5A-5B, the thermal control tape system 30, such as in the form of thermal control tape system 30d, further comprises the second release liner layer 46b having the first side 50a (see FIG. 5A) and the second side 50b, where the first side 50a of the second release liner layer 46b is preferably removably attached to the second side 44b of the silicone PSA layer 40. The thicknesses and preferred materials of the first release liner layer 46a (see FIGS. 5A-5B) and the second release liner layer 46b (see FIGS. 5A-5B) are the same as discussed above with respect to FIGS. 2A-2B.

Now referring to FIG. 6, FIG. 6 is an illustration of a solar absorptance graph 70 for testing a solar absorptance (SA) 71 on a thermal control surface 64 (see FIG. 8), for example, a white thermal control surface, such as the filled silicone resin layer 32 (see FIGS. 2A-5D) filled with the white inorganic filler material 36 (see FIGS. 2A-5D) of exemplary aspects of the thermal control tape 10 (see FIGS. 2A-5D) of the disclosure. As used herein, "solar absorptance" means a measure of the ability or effectiveness of a surface of a material in absorbing radiant energy, and is a ratio of total absorbed radiant energy to incident radiant energy measured as a unitless factor between 0 and 1.

To obtain the solar absorptance 71 (see FIG. 6) of a surface or material, a percent (%) total reflectance 72, as a function of wavelength (nm - nanometer) 74, is measured, from which the solar absorptance 71 is then calculated. FIG. 6 shows a solar absorptance plot 76. An average solar absorptance obtained from the solar absorptance plot 76 was 0.2027. Preferably, the thermal control tape 10 (see FIGS. 2A-5D) disclosed herein has a solar absorptance (SA) 71 in a range of from 0.16 to 0.30. The filled silicone resin layer 32 (see FIGS. 2A-5D) functioning as a thermal control layer 64 (see FIG. 8) preferably has a solar absorptance 71 that is low and a reflectance that is high.

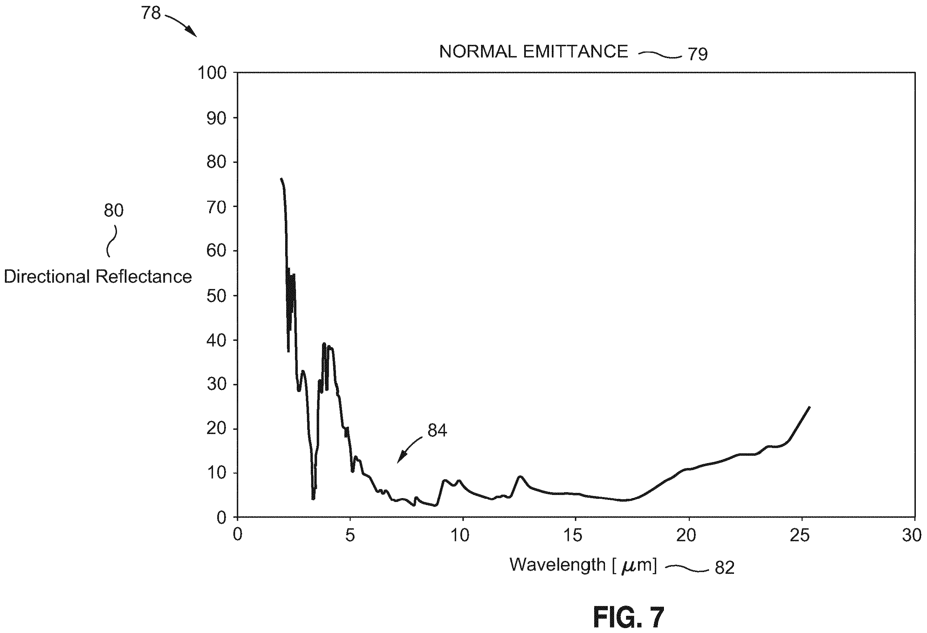

Now referring to FIG. 7, FIG. 7 is an illustration of a normal emittance graph 78 for testing a normal emittance 79 (or emittance or thermal emittance) on the thermal control surface 64 (see FIG. 8), for example, the white thermal control surface, such as the filled silicone resin layer 32 (see FIGS. 2A-5D) filled with the white inorganic filler material 36 (see FIGS. 2A-5D) of exemplary aspects of the thermal control tape 10 (see FIGS. 2A-5D) of the disclosure. As used herein, "normal emittance" or "emittance" or "thermal emittance" means a measure of the energy radiated by the surface of a body per second per unit area, and is a ratio of the radiant emittance of heat of a specific surface to that of a standard black body measured as a unitless factor between 0 and 1.

To obtain the normal emittance 79 (see FIG. 7) of a surface or material, a directional reflectance 80, as a function of wavelength (µm - micrometer) 82, is measured, from which the normal emittance 79 is then calculated. FIG. 6 shows a normal emittance plot 84. An average normal emittance obtained from the normal emittance plot 84 was 0.93. The normal emittance 79 (see FIG. 7) is measured at a higher wavelength 82 than the solar absorptance 71 (see FIG. 6). Preferably, the thermal control tape 10 (see FIGS. 2A-5D) disclosed herein has a thermal emittance 84 (see FIG. 8) greater than 0.88. More preferably, the thermal control tape 10 (see FIGS. 2A-5D) has a thermal emittance 84 (see FIG. 8) in a range of from 0.88 to 0.96.

Now referring to FIG. 8, FIG. 8 is an illustration of a functional block diagram showing exemplary aspects of the thermal control tape system 30 and the thermal control tape 10 of the disclosure. As shown in FIG. 8, and as discussed in detail above, the thermal control tape 10 (see FIGS. 2A-5D) is designed for use on one or more surfaces 54 of the structure 52, such as the spacecraft structure 52a, of the spacecraft 12. As further shown in FIG. 8, the spacecraft 12 may comprise a satellite 12a, an unmanned spacecraft 12b, a manned spacecraft 12c, a rocket 12d, a re-entry vehicle 12e, a reusable launch vehicle 12f, or another suitable spacecraft 12. Preferably, the surface 54 (see FIG. 8) is a prepared surface 54a (see FIG. 8) and a thermal control surface 54b (see FIG. 8). In certain versions, the surface 54 may comprise a perforated surface 55 (see FIGS. 2D, 3D, 4D, 5D, 8).

As further shown in FIG. 8, the thermal control tape system 30 comprises the first release liner layer 46a and the second release liner layer 46b, discussed in detail above. As further shown in FIG. 8, the thermal control tape system 30 comprises the thermal control tape 10 for providing thermal control 11 of one or more surfaces 54 of the structure 52, such as the spacecraft structure 52a. The thermal control tape 10 (see FIG. 8) comprises the filled silicone resin layer 32 (see FIG. 8) in the form of the unperforated filled silicone resin layer 32a (see FIG. 8), or in the form of the perforated filled silicone resin layer 32b (see FIG. 8) having the plurality of perforations 56 (see FIG. 8).

As shown in FIG. 8, the filled silicone resin layer 32 comprises the silicone resin material 34, such as in the form of silicone polymeric resin material 34a, filled with the white inorganic filler material 36 comprising zinc oxide pigment particles 37 doped with the dopant element 39. As further shown in FIG. 8, the dopant element 39 consists of one of, aluminum 39a, gallium 39b, indium 39c, boron 39, zinc 39e, tin 39f, hydrogen 39g, or another suitable dopant element 39, to form doped zinc oxide pigment particles 36a.

As shown in FIG. 8, the thermal control tape 10 further comprises the silicone pressure sensitive adhesive (PSA) layer 40 preferably made of silicone PSA 42, and coupled to the filled silicone resin layer 32, where the silicone PSA layer 40 may be in the form of the unfilled silicone PSA layer 40a, or the filled silicone PSA layer 40b. The silicone PSA layer 40 (see FIG. 8), such as the filled silicone PSA layer 40b (see FIG. 8) preferably further comprises the electrostatic dissipative (ESD) filler material 58 (see FIG. 8) comprising one of, the metallic filler material 58a (see FIG. 8), the carbon filler material 58b (see FIG. 8), or another suitable ESD filler material 58. The filled silicone PSA layer 40b (see FIG. 8) creates an electrostatic dissipative system 59 (see FIG. 8).

In some versions, the thermal control tape 10 (see FIG. 8) may optionally comprise the film layer 60 (see FIG. 8) attached between the filled silicone resin layer 32 (see FIG. 8) and the silicone PSA layer 40 (see FIG. 8). As shown in FIG. 8, in one version, the film layer 60 comprises the non-conductive film layer 60a comprising the electrically insulating polyimide film 60c, or another suitable non-conductive polyimide or polymer. As further shown in FIG. 8, in another version, the film layer 60 comprises the conductive film layer 60b comprising one of the electrically conductive polyimide film 60d, the electrically conductive carbon-filled polyimide film 60e, or another suitable conductive polyimide or polymer.

The thermal control tape 10 (see FIG. 8) is configured for attachment to at least one surface 54 (see FIG. 8) of the structure 52 (see FIG. 8), such as the spacecraft structure 52a (see FIG. 8), of the spacecraft 12 (see FIGS. 1, 8), to provide thermal control 11 (see FIG. 8) of the spacecraft structure 52a, by radiating heat 66 (see FIG. 8) away from the spacecraft structure 52a. The filled silicone resin layer 32 (see FIG. 8) functions as a thermal control layer 64 (see FIG. 8). The thermal control tape 10 (see FIG. 8) functions as a thermally emissive tape 86a (see FIG. 8) comprising a cured thermally emissive paint 86b (see FIG. 8) adhered to a silicone PSA layer 40 (see FIG. 8), where the thermal control tape 10 (see FIG. 8) has a uniform thickness 88 with improved quality (see FIG. 8), an improved electrical stability 90, and an improved tape handling stability 92 (see FIG. 8).

The thermal control tape 10 (see FIG. 8) preferably meets the optical properties 68 (see FIG. 8) of solar absorptance 71 (see FIG. 8) being low (e.g., 0.18 to 0.30), and thermal emittance 84 (see FIG. 8) being high (e.g., greater than 0.9). In the application of the thermal control tape 10 (see FIG. 8), a robotic assembly 96 (see FIG. 8) using a plurality of robot parameters 97 (see FIG. 8) may preferably be used to control the thickness precisely and to optimize a uniform thickness 88 (see FIG. 8) of the thermal control tape 10. Various robot parameters 97 (see FIG. 8) may include, but are not limited to, positioning the robotic assembly 96 (see FIG. 8) ninety (90) degrees to the surface 54 (see FIG. 8) to be applied with the thermal control tape 10, using an optimum spraying angle 94 (see FIG. 8) of six (6) +/- 0.25 inches spray nozzle to the structure 52 (see FIG. 8), spraying four (4) inches beyond the edges of the structure 52 (see FIG. 8), having a flow rate of two hundred (200) cc/min (cubic centimeters per minute), having a head speed of three hundred (300) mm/sec (millimeters per second), having a rastering index of 37.5 mm (millimeters), and other suitable robot parameters 97. Preferably, the application using the robotic assembly 96 is performed at a temperature of about seventy-five (75) +/- 10 degrees Fahrenheit.

As further shown in FIG. 8, the thermal control tape 10 may be formed with a thermal control tape processing 98, including a vacuum bag processing 98a, or other suitable processing techniques. The layers of the thermal control tape 10 (see FIG. 8), such as the filled silicone resin layer 32 (see FIG. 8), the silicone PSA layer 40 (see FIG. 8), and optionally, the film layer 60 (see FIG. 8), may be compressed together using the vacuum bag processing 98a (see FIG. 8) or other suitable processing techniques.

In one exemplary thermal control tape processing 98, the filled silicone resin layer 32 (see FIG. 8) may be applied, such as spray applied, to the first release liner layer 46a (see FIG. 8). The silicone PSA layer 40 (see FIG. 8) having the second release liner layer 46b (see FIG. 8) applied to the silicone PSA layer 40 may then be applied on top of the filled silicone resin layer 32 (see FIG. 8). The filled silicone resin layer 32 with the first release liner layer 46a and the silicone PSA layer 40 with the second release liner layer 46b may then be vacuum sealed with the vacuum bag processing 98a or another suitable sealing process, to compress the filled silicone resin layer 32 and the silicone PSA layer 40 together. When the thermal control tape 10 is processed and ready for application to one or more surfaces 54 (see FIG. 8) of the structure 52 (see FIG. 8), the second release liner layer 46b may be removed from the silicone PSA layer 40 and the silicone PSA layer 40 applied to the surface 54, and the first release liner layer 46a may be removed from the filled silicone resin layer 32.

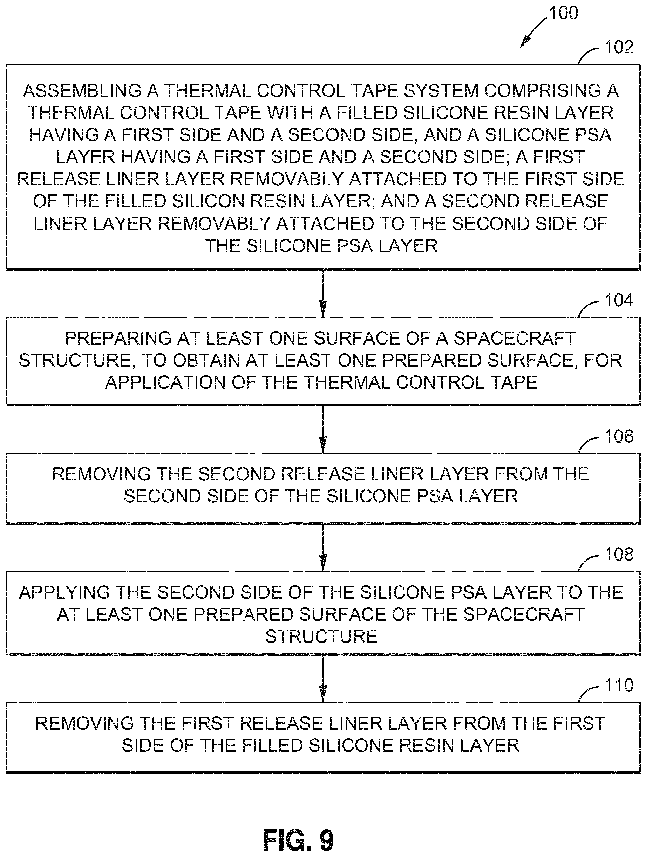

Now referring to FIG. 9, FIG. 9 is an illustration of an exemplary flowchart showing a method 100 of using a thermal control tape 10 (see FIGS. 2A-5D) to provide thermal control 11 (see FIG. 8) of a structure 52 (see FIGS. 2C, 3C, 4C, 5C, 8), such as a spacecraft structure 52a (see FIGS. 2C, 3C, 4C, 5C, 8), to which the thermal control tape 10 (see FIGS. 2A-5D) is applied, according to an aspect of the disclosure. As shown in FIG. 9, the method 100 comprises step 102 of assembling a thermal control tape system 30 (see FIG. 8). The thermal control tape system 30 (see FIG. 8) comprises a thermal control tape 10 (see FIGS. 2A-3D, 8), as discussed in detail above.

As further discussed above, the thermal control tape 10 (see FIGS. 2A-5D) comprises the filled silicone resin layer 32 (see FIGS. 2A-5D) having the first side 38a (see FIG. 2A) and the second side 38b (see FIG. 2A). The filled silicone resin layer 32 (see FIGS. 2A-5D) comprises the silicone resin material 34 (see FIGS. 2A-5D) filled with the white inorganic filler material 36 (see FIGS. 2A-5D). The thermal control tape 10 (see FIGS. 2A-5D) comprises the silicone pressure sensitive adhesive (PSA) layer 40 (see FIGS. 2A-5D) having the first side 44a (see FIG. 2A) and the second side 44b (see FIG. 2A). The first side 44a of the silicone PSA layer 40 is attached to the second side 28b of the filled silicone resin layer 32.

As further discussed above, the thermal control tape system 30 (see FIGS. 2A, 3A, 4A, 5A) further comprises the first release liner layer 46a (see FIGS. 2A, 3A, 4A, 5A) removably attached to the first side 38a of the filled silicone resin layer 32. The thermal control tape system 30 (see FIGS. 2A, 3A, 4A, 5A) further comprises the second release liner layer 46b (see FIGS. 2A, 3A, 4A, 5A) removably attached to the second side 44b of the silicone PSA layer 40.

The step 102 (see FIG. 9) of assembling the thermal control tape system 30 (see FIGS. 3A, 5A) may further comprise adding to the silicone PSA layer 40 (see FIGS. 3A, 5A) of the thermal control tape 10 (see FIGS. 3A, 5A), an electrostatic dissipative (ESD) filler material 58 (see FIGS. 3A, 5A) comprising one of, a metallic filler material 58a (see FIG. 8), a carbon filler material 58b (see FIG. 8), or another suitable ESD filler material 58.

The step 102 (see FIG. 9) of assembling the thermal control tape system 30 (see FIGS. 4A-5D) may further comprise optionally adding a film layer 60 (see FIGS. 4A-5D) between the filled silicone resin layer 32 (see FIGS. 4A-5D) and the silicone PSA layer 40 (see FIGS. 4A-5D). As discussed above, the film layer 60 may comprise a non-conductive film layer 60a (see FIGS. 4A-4D), or may comprise a conductive film layer 60b (see FIGS. 5A-5D).

The step 102 (see FIG. 9) of assembling the thermal control tape system 30 (see FIGS. 2A-5D) may further comprise forming the white inorganic filler material 36 (see FIGS. 2A-5D) of the filled silicone resin layer 32 (see FIGS. 2A-5D) of the thermal control tape 10 (see FIGS. 2A-5D) comprising doped zinc oxide pigment particles 36a (see FIG. 8) formed from zinc oxide pigment particles 37 (see FIG. 8) doped with the dopant element 39 (see FIG. 8). As shown in FIG. 8, the dopant element 39 may consist of aluminum 39a, gallium 39b, indium 39c, boron 39d, zinc 39e, tin 39f, hydrogen 39g, or another suitable dopant element 39.

As shown in FIG. 9, the method 100 further comprises step 104 of preparing at least one surface 54 (see FIGS. 2C, 3C, 4C, 5C, 8) of the structure 52 (see FIGS. 2C, 3C, 4C, 5C, 8), such as the spacecraft structure 52a (see FIG. 8), to obtain at least one prepared surface 54a (see FIG. 8), for application of the thermal control tape 10 (see FIGS. 2C, 3C, 4C, 5C, 8).

As shown in FIG. 9, the method 100 further comprises step 106 of removing the second release liner layer 46b (see FIGS. 2A, 3A, 4A, 5A) from the second side 44b (see FIGS. 2A, 3A, 4A, 5A) of the silicone PSA layer 40 (see FIGS. 2A, 3A, 4A, 5A).

As shown in FIG. 9, the method 100 further comprises step 108 of applying the second side 44b (see FIGS. 2A, 3A, 4A, 5A) of the silicone PSA layer 40 (see FIGS. 2A, 3A, 4A, 5A) to the at least one prepared surface 54a (see FIG. 8) of the spacecraft structure 52a (see FIG. 8).

As shown in FIG. 9, the method 100 further comprises step 110 of removing the first release liner layer 46a (see FIGS. 2A, 3A, 4A, 5A) from the first side 38a (see FIGS. 2A, 3A, 4A, 5A) of the filled silicone resin layer 32 (see FIGS. 2A, 3A, 4A, 5A).

The method 100 may be partially or fully performed on a manual basis or on an automated basis. If the method 100 (see FIG. 9) is performed on an automated basis, at least the step 104 of preparing the at least one surface 54 (see FIGS. 1, 2C, 3C, 4C, 5C), the step 106 of removing the second release liner layer 46b (see FIGS. 2A, 3A, 4A, 5A), the step 108 of applying the second side 44b (see FIGS. 2A, 3A, 4A, 5A) of the silicone PSA layer 40 (see FIGS. 2A, 3A, 4A, 5A), and the step 110 of removing the first release liner layer 46a, are preferably performed using a robotic assembly 96 (see FIG. 8).

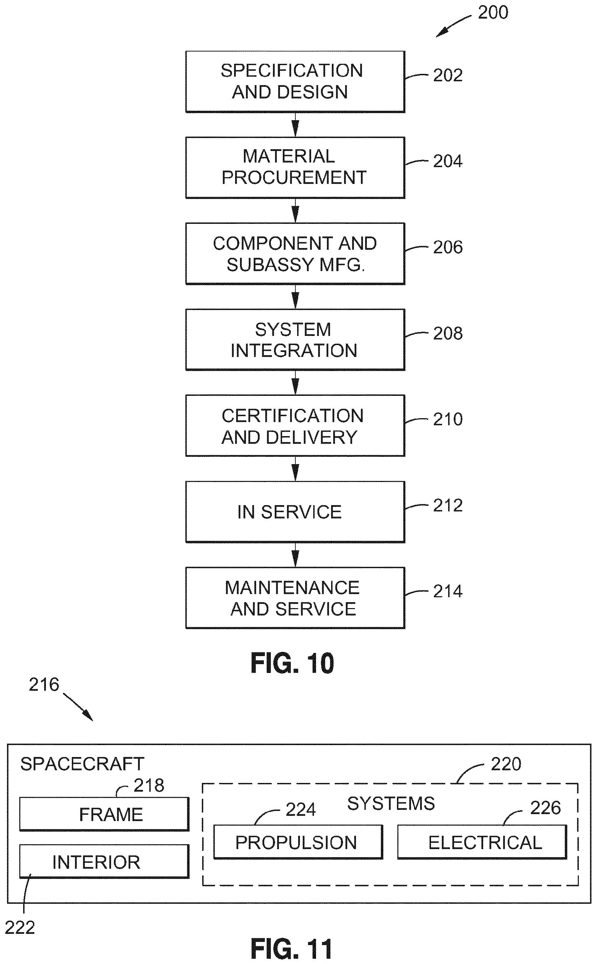

FIG. 10 is an illustration of a flow diagram of an exemplary spacecraft manufacturing and service method 200. FIG. 11 is an illustration of an exemplary block diagram of a spacecraft 216. Referring to FIGS. 10-11, aspects of the disclosure may be described in the context of the spacecraft manufacturing and service method 200 as shown in FIG. 10, and the spacecraft 216 as shown in FIG. 11.

During pre-production, exemplary spacecraft manufacturing and service method 200 may include specification and design 202 of the spacecraft 216 and material procurement 204. During manufacturing, component and subassembly manufacturing 206 and system integration 208 of the spacecraft 216 takes place. Thereafter, the spacecraft 216 may go through certification and delivery 210 in order to be placed in service 212. While in service 212 by a customer, the spacecraft 216 may be scheduled for routine maintenance and service 214 (which may also include modification, reconfiguration, refurbishment, and other suitable services).

Each of the processes of the spacecraft manufacturing and service method 200 may be performed or carried out by a system integrator, a third party, and/or an operator (e.g., a customer). For the purposes of this description, a system integrator may include, without limitation, any number of spacecraft manufacturers and major-system subcontractors. A third party may include, without limitation, any number of vendors, subcontractors, and suppliers. An operator may include an aerospace company, a leasing company, a military entity, a service organization, and other suitable operators.

As shown in FIG. 11, the spacecraft 216 produced by the exemplary spacecraft manufacturing and service method 200 may include a frame 218 with a plurality of systems 220 and an interior 222. Examples of the plurality of systems 220 may include one or more of a propulsion system 224 and an electrical system 226. Any number of other systems may be included. Although an aerospace example is shown, the principles of the disclosure may be applied to other industries, such as the automotive industry.

Methods and systems embodied herein may be employed during any one or more of the stages of the spacecraft manufacturing and service method 200. For example, components or subassemblies corresponding to component and subassembly manufacturing 206 may be fabricated or manufactured in a manner similar to components or subassemblies produced while the spacecraft 216 is in service 212. Also, one or more apparatus aspects, method aspects, or a combination thereof, may be utilized during component and subassembly manufacturing 206 and system integration 208, for example, by substantially expediting assembly of or reducing the cost of the spacecraft 216. Similarly, one or more of apparatus aspects, method aspects, or a combination thereof, may be utilized while the spacecraft 216 is in service 212, for example and without limitation, to maintenance and service 214.

Disclosed aspects of the thermal control tape 10 (see FIGS. 2A-5D, 8), the thermal control tape system 30 (see FIGS. 2A-2B, 3A-3B, 4A-4B, 5A-5B, 8), and the method 100 (see FIG. 9) provide a novel solution for producing a thermal control surface 54b (see FIG. 8) that radiates heat 66 (see FIG. 8) from spacecraft 12 (see FIG. 8) by using a thermally emissive tape 86a (see FIG. 8) comprised of a filled silicone resin layer 32 (see FIG. 8) and a silicone PSA layer 40 (see FIG. 8), rather than coating structures such as radiators and other components with thermal paint alone. All the processes associated with painting, including masking, priming, painting, demasking, and cleanup are eliminated and replaced with a peel and stick thermal control and thermally emissive tape 86a (see FIG. 8). Moreover, because these processes associated with painting are eliminated, the need for paint facilities, such as a paint booth, is also eliminated, the need for trained and certified painters is eliminated, the environmental impact and safety concerns of painting are eliminated, the 7-14 day paint curing time is eliminated, and the overall processing and cycle time are reduced. Thus, the simplicity of the thermal control tape 10 (see FIGS. 2A-5D, 8), the thermal control tape system 30 (see FIGS. 2A-2B, 3A-3B, 4A-4B, 5A-5B, 8), and the method 100 (see FIG. 9) allow for cost reduction and reduced cycle time by eliminating the painting operations, and allow for replacement of paint when economical and practical.

Further, the thermal control layer 64 (see FIG. 8) may be applied late in the spacecraft/hardware integration or during a final spacecraft integration, as opposed to having to paint early due to the paint process, which may increase the risk that the white thermal control layer may be scuffed or damaged along the process. Moreover, there is no need to transfer hardware or sensitive electronics to a paint facility. Thus, the thermal control tape 10 (see FIGS. 2A-5D, 8), the thermal control tape system 30 (see FIGS. 2A-2B, 3A-3B, 4A-4B, 5A-5B, 8), and the method 100 (see FIG. 9) allow for faster hardware integration due to the point of integration application of the white PSA (e.g., no need to transfer to a paint facility).

In addition, disclosed aspects of the thermal control tape 10 (see FIGS. 2A-5D, 8), the thermal control tape system 30 (see FIGS. 2A-2B, 3A-3B, 4A-4B, 5A-5B, 8), and the method 100 (see FIG. 9) provide optimized optical properties 68 (see FIG. 8), such as a low solar absorptance 71 (see FIG. 8) and a high thermal emittance 84 (see FIG. 8). As compared to known thermal control tapes, such as known silver and aluminum foil tapes, the thermal emittance 84 of the thermal control tape 10 disclosed herein is much higher and the reflection is a desirable diffuse reflection as opposed to an undesirable specular reflection. Further, disclosed aspects of the thermal control tape 10 (see FIGS. 2A-5D, 8) provide a thermal control layer 64 (see FIG. 8) having a uniform thickness 88 (see FIG. 8) and uniform coverage with no variability in the thickness or coverage of the filled silicone resin layer 32 (see FIGS. 2A-5D), and in turn, the thermal control tape 10 (see FIGS. 2A-5D). Moreover, disclosed aspects of the thermal control tape 10 (see FIGS. 2A-5D) diffuse reflectance, provide electrostatic charge dissipation, provide easy and simple touchup, if a piece of the thermal control tape 10 needs to be reapplied or fixed, eliminate a seven (7) day or longer curing time, provide improved adhesion over a wide temperature range and provide the ability to remain adhered to the substrate given the harsh space environment (i.e., large temperature deltas and radiation exposure), and provide survival against radiation damage.

## Claims

1. A thermal control tape (10) for providing thermal control of a spacecraft structure (52a), to which the thermal control tape is applied, the thermal control tape comprising:
a filled silicone resin layer (32) having a first side (38a) and a second side (38b), the filled silicone resin layer comprising a silicone resin material (34) filled with a white inorganic filler material (36); and
a silicone pressure sensitive adhesive (PSA) layer (40) having a first side (44a) and a second side (44b), the first side of the silicone PSA layer attached to the second side of the filled silicone resin layer,
wherein the filled silicone resin layer and the silicone PSA layer form the thermal control tape, with the second side of the silicone PSA layer configured for attachment to at least one surface (54) of the spacecraft structure of a spacecraft (12), to provide thermal control of the spacecraft structure, by radiating heat away from the spacecraft structure; the thermal control tape further comprising
a conductive film layer (60b) added between the filled silicone resin layer (32) and the silicone PSA layer (40); and
wherein the silicone PSA layer (40) further comprises an electrostatic dissipative (ESD) filler material (58) comprising one of, a metallic filler material (58a), and a carbon filler material (58b).

2. The thermal control tape (10) of claim 1 further comprising a first release liner layer (46a) removably attached to the first side (38a) of the filled silicone resin layer (32), and a second release liner layer (46b) removably attached to the second side (44b) of the silicone PSA layer (40).

3. The thermal control tape (10) of claim 1 or claim2 wherein the white inorganic filler material (36) comprises doped zinc oxide pigment particles (36a) formed from zinc oxide pigment particles (37) doped with a dopant element (39) comprising one of, aluminum, gallium, indium, boron, zinc, tin, and hydrogen.

4. The thermal control tape (10) of any of claims 1-3 wherein the thermal control tape has a solar absorptance (71) (SA) in a range of 0.16 to 0.30.

5. The thermal control tape (10) of any of claims 1-4 wherein the thermal control tape has a thermal emittance (84) in a range of 0.88 to 0.96.

6. The thermal control tape (10) of any of claims 1-5 wherein the filled silicone resin layer (32) has a plurality of perforations (56).

7. A method (100) of using a thermal control tape (10) to provide thermal control of a spacecraft structure (52a), to which the thermal control tape is applied, the method comprising the steps of:
assembling (102) a thermal control tape system (30) comprising:
a thermal control tape comprising:
a filled silicone resin layer (32) having a first side (38a) and a second side (38b), the filled silicone resin layer comprising a silicone resin material filled (34) with a white inorganic filler material (36); and
a silicone pressure sensitive adhesive (PSA) layer (40) having a first side (44a) and a second side (44b), the first side of the silicone PSA layer attached to the second side of the filled silicone resin layer;
a first release liner layer (46a) removably attached to the first side of the filled silicone resin layer; and
a second release liner layer (46b) removably attached to the second side of the silicone PSA layer;
preparing (104) at least one surface (54) of the spacecraft structure (52a), to obtain at least one prepared surface (54a), for application of the thermal control tape;
removing (106) the second release liner layer from the second side of the silicone PSA layer;
applying (108) the second side of the silicone PSA layer to the at least one prepared surface of the spacecraft structure; and
removing (110) the first release liner layer from the first side of the filled silicone resin layer;
wherein assembling (102) the thermal control tape system (30) further comprises adding to the silicone PSA layer (40) of the thermal control tape (10), an electrostatic dissipative (ESD) filler material (58) comprising one of, a metallic filler material (58a), and a carbon filler material (58b); and
wherein assembling (102) the thermal control tape system (30) further comprises adding a conductive film layer (60b) between the filled silicone resin layer (32) and the silicone PSA layer (40).

8. The method (100) of any of claim 7 wherein at least preparing (104) the at least one surface (54), removing the second release liner layer (46b), applying the second side (44b) of the silicone PSA layer (40), and removing the first release liner layer (46a), are performed using a robotic assembly (96).

## Patentansprüche

1. Wärmeregulierungsband (10) zum Bereitstellen von Wärmeregulierung einer Raumfahrzeugstruktur (52a), an der Wärmeregulierungsband angebracht ist, wobei das Wärmeregulierungsband aufweist:
eine gefüllte Silikonharzschicht (32), die eine erste Seite (38a) und eine zweite Seite (38b) hat, wobei die gefüllte Silikonharzschicht ein Silikonharzmaterial (34) aufweist, das mit einem weißen anorganischen Füllstoff (36) gefüllt ist; und
eine Silikonhaftkleberschicht (40), die eine erste Seite (44a) und eine zweite Seite (44b) hat, wobei die erste Seite der Silikonhaftkleberschicht an der zweiten Seite der gefüllten Silikonharzschicht befestigt ist,
wobei die gefüllte Silikonharzschicht und die Silikonhaftkleberschicht das Wärmeregulierungsband bilden, wobei die zweite Seite der Silikonhaftkleberschicht zur Befestigung an wenigstens einer Oberfläche (54) der Raumfahrzeugstruktur eines Raumfahrzeugs (12) konfiguriert ist, um Wärmeregulierung der Raumfahrzeugstruktur bereitzustellen, indem Wärme von der Raumfahrzeugstruktur abgestrahlt wird; wobei das Wärmeregulierungsband des Weiteren aufweist
eine leitende Folienschicht (60b), die zwischen der gefüllten Silikonharzschicht (32) und der Silikonhaftkleberschicht (40) hinzugefügt ist; und
wobei die Silikonhaftkleberschicht (40) des Weiteren einen elektrostatischen dissipativen (ESD) Füllstoff (58) aufweist, der eines aufweist von einem metallischen Füllstoff (58a) und einem Karbonfüllstoff (58b).

2. Wärmeregulierungsband (10) nach Anspruch 1, das des Weiteren eine erste Trennfolienschicht (46a) aufweist, die entfernbar an der ersten Seite (38a) der gefüllten Silikonharzschicht (32) befestigt ist, und eine zweite Trennfolienschicht (46b), die entfernbar an der zweiten Seite (44b) der Silikonhaftkleberschicht (40) befestigt ist.

3. Wärmeregulierungsband (10) nach Anspruch 1 oder Anspruch 2, wobei der weiße anorganische Füllstoff (36) dotierte Zinkoxid-Pigmentpartikel (36a) aufweist, die aus Zinkoxid-Pigmentpartikeln (37) gebildet sind, welche mit einem Dotierelement (39) dotiert sind, das eines aufweist von Aluminium, Gallium, Indium, Bor, Zink, Zinn und Wasserstoff.

4. Wärmeregulierungsband (10) nach einem der Ansprüche 1-3, wobei das Wärmeregulierungsband ein Solarabsorptionsvermögen (71) (SA) in einem Bereich von 0,16 bis 0,30 hat.

5. Wärmeregulierungsband (10) nach einem der Ansprüche 1-4, wobei das Wärmeregulierungsband ein Wärmeemissionsvermögen (84) in einem Bereich von 0,88 bis 0,96 hat.

6. Wärmeregulierungsband (10) nach einem der Ansprüche 1-5, wobei die gefüllte Silikonharzschicht (32) eine Vielzahl von Perforationen (56) hat.

7. Verfahren (100) zum Verwenden eines Wärmeregulierungsbands (10), um Wärmeregulierung einer Raumfahrzeugstruktur (52a) bereitzustellen, an der das Wärmeregulierungsband angebracht ist, wobei das Verfahren die folgenden Schritte aufweist:
Zusammensetzen (102) eines Wärmeregulierungsband-Systems (30), das aufweist:
ein Wärmeregulierungsband, das aufweist:
eine gefüllte Silikonharzschicht (32), die eine erste Seite (38a) und eine zweite Seite (38b) hat, wobei die gefüllte Silikonharzschicht ein Silikonharzmaterial (34) aufweist, das mit einem weißen anorganischen Füllstoff (36) gefüllt ist; und
eine Silikonhaftkleberschicht (40), die eine erste Seite (44a) und eine zweite Seite (44b) hat, wobei die erste Seite der Silikonhaftkleberschicht an der zweiten Seite der gefüllten Silikonharzschicht befestigt ist;
eine erste Trennfolienschicht (46a), die entfernbar an der ersten Seite der gefüllten Silikonharzschicht befestigt ist; und
eine zweite Trennfolienschicht (46b), die entfernbar an der zweiten Seite der Silikonhaftkleberschicht befestigt ist;
Präparieren (104) wenigstens einer Oberfläche (54) der Raumfahrzeugstruktur (52a), um wenigstens eine präparierte Oberfläche (54a) zum Anbringen des Wärmeregulierungsbands zu erhalten;
Entfernen (106) der zweiten Trennfolienschicht von der zweiten Seite der Silikonhaftkleberschicht;
Anbringen (108) der zweiten Seite der Silikonhaftkleberschicht an der wenigstens einen präparierten Oberfläche der Raumfahrzeugstruktur; und
Entfernen (110) der ersten Trennfolienschicht von der ersten Seite der gefüllten Silikonharzschicht;
wobei das Zusammensetzen (102) des Wärmeregulierungsband-Systems (30) des Weiteren das Hinzufügen, zu der Silikonhaftkleberschicht (40) des Wärmeregulierungsbands (10), eines elektrostatischen dissipativen (ESD) Füllstoffs (58) aufweist, der eines aufweist von einem metallischen Füllstoff (58a) und einem Karbonfüllstoff (58b); und
wobei das Zusammensetzen (102) des Wärmeregulierungsband-Systems (30) des Weiteren das Hinzufügen einer leitenden Folienschicht (60b) zwischen die gefüllte Silikonharzschicht (32) und die Silikonhaftkleberschicht (40) aufweist.

8. Verfahren (100) nach Anspruch 7, wobei wenigstens das Präparieren (104) der wenigstens einen Oberfläche (54), das Entfernen der zweiten Trennfolienschicht (46b), das Anbringen der zweiten Seite (44b) der Silikonhaftkleberschicht (40) und das Entfernen der ersten Trennfolienschicht (46a) unter Verwendung einer Roboteranordnung (96) durchgeführt werden.

## Revendications

1. Bande de contrôle thermique (10) pour fournir le contrôle thermique d'une structure de vaisseau spatial (52a), structure sur laquelle est appliquée la bande de contrôle thermique, la bande de contrôle thermique comprenant :
une couche remplie de résine de silicone (32), ladite couche ayant un premier côté (38a) et un second côté (38b), la couche remplie de résine de silicone comprenant un matériau en résine de silicone (34) rempli d'un matériau (36) d'une charge inorganique blanche ; et
une couche (40) d'adhésif en silicone sensible à la pression (PSA), ladite couche ayant un premier côté (44a) et un second côté (44b), le premier côté de la couche de PSA en silicone étant fixé sur le second côté de la couche remplie de résine de silicone,
bande dans laquelle la couche remplie de résine de silicone et la couche de PSA en silicone forment la bande de contrôle thermique, le second côté de la couche de PSA en silicone étant configuré pour être fixé sur au moins une surface (54) de la structure d'un vaisseau spatial (12), afin de fournir le contrôle thermique de la structure de vaisseau spatial, par rayonnement de chaleur à distance de la structure de vaisseau spatial ; la bande de contrôle thermique comprenant en outre :
une couche de film conducteur (60b) ajoutée entre la couche remplie de résine de silicone (32) et la couche (40) de PSA en silicone ; et
bande dans laquelle la couche (40) de PSA en silicone comprend en outre un matériau (58) d'une charge dissipative électrostatique (ESD), ledit matériau comprenant l'un d'un matériau de charge métallique (58a) et d'un matériau de charge de carbone (58b).

2. Bande de contrôle thermique (10) selon la revendication 1, comprenant en outre une première couche de revêtement antiadhésif (46a) fixée de façon détachable sur le premier côté (38a) de la couche remplie de résine de silicone (32), et une seconde couche de revêtement antiadhésif (46b) fixée de façon détachable sur le second côté (44b) de la couche (40) de PSA en silicone.

3. Bande de contrôle thermique (10) selon la revendication 1 ou la revendication 2, dans laquelle le matériau (36) de la charge inorganique blanche comprend des particules dopées (36a) de pigment d'oxyde de zinc, lesdites particules étant formées à partir de particules de pigment d'oxyde de zinc (37) dopées avec un élément dopant (39) comprenant l'un ou l'autre des éléments comme de l'aluminium, du gallium, de l'indium, du bore, du zinc, de l'étain et de l'hydrogène.

4. Bande de contrôle thermique (10) selon l'une quelconque des revendications 1 à 3, où la bande de contrôle thermique a une absorption solaire (71) (AS) dans une plage de 0,16 à 0,30.

5. Bande de contrôle thermique (10) selon l'une quelconque des revendications 1 à 4, où la bande de contrôle thermique a une émissivité thermique (84) dans une plage de 0,88 à 0,96.

6. Bande de contrôle thermique (10) selon l'une quelconque des revendications 1 à 5, dans laquelle la couche remplie de résine de silicone (32) a une pluralité de perforations (56).

7. Procédé (100) d'utilisation d'une bande de contrôle thermique (10), afin de fournir le contrôle thermique d'une structure de vaisseau spatial (52a), structure sur laquelle est appliquée la bande de contrôle thermique, le procédé comprenant les étapes :
d'assemblage (102) d'un système de bande de contrôle thermique (30) comprenant :
une bande de contrôle thermique comprenant :
une couche remplie de résine de silicone (32) ayant un premier côté (38a) et un second côté (38b), la couche remplie de résine de silicone comprenant un matériau à base de résine de silicone, ledit matériau étant rempli (34) d'un matériau (36) d'une charge inorganique blanche ; et
une couche (40) d'adhésif en silicone sensible à la pression (PSA), ladite couche ayant un premier côté (44a) et un second côté (44b), le premier côté de la couche de PSA en silicone étant fixé sur le second côté de la couche remplie de résine de silicone ;
une première couche de revêtement antiadhésif (46a) fixée de façon détachable sur le premier côté de la couche remplie de résine de silicone ; et
une seconde couche de revêtement antiadhésif (46b) fixée de façon détachable sur le second côté de la couche de PSA en silicone ;
de préparation (104) d'au moins une surface (54) de la structure de vaisseau spatial (52a), afin d'obtenir au moins une surface préparée (54a), pour application de la bande de contrôle thermique ;
de suppression (106) de la seconde couche de revêtement antiadhésif retirée du second côté de la couche de PSA en silicone ;
d'application (108) du second côté de la couche de PSA en silicone sur l'au moins une surface préparée de la structure de vaisseau spatial ; et
de suppression (110) de la première couche de revêtement antiadhésif retirée du premier côté de la couche remplie de résine de silicone ;
procédé dans lequel l'assemblage (102) du système de bande de contrôle thermique (30) comprend en outre le fait d'ajouter à la couche (40) de PSA en silicone de la bande de contrôle thermique (10), un matériau (58) d'une charge dissipative électrostatique (ESD), ledit matériau comprenant l'un d'un matériau de charge métallique (58a) et d'un matériau de charge de carbone (58b) ; et
procédé dans lequel l'assemblage (102) du système de bande de contrôle thermique (30) comprend en outre le fait d'ajouter une couche de film conducteur (60b) entre la couche remplie de résine de silicone (32) et la couche (40) de PSA en silicone.

8. Procédé (100) selon la revendication 7, dans lequel au moins la préparation (104) de l'au moins une surface (54), la suppression de la seconde couche de revêtement antiadhésif (46b), l'application du second côté (44b) de la couche (40) de PSA en silicone et la suppression de la première couche de revêtement antiadhésif (46a) sont exécutées en utilisant un ensemble robotique (96).
